# EUROPÄISCHE PATENTANMELDUNG

(11) **EP 3 124 565 A1**
(43) Veröffentlichungstag der Anmeldung: **01.02.2017**
(21) Anmeldenummer: 16178055.6
(22) Anmeldetag: 05.07.2016
(51) Int. Cl.: C09J 7/04, B65H 19/10

(54) **KLEBEBAND FÜR DEN FLIEGENDEN ROLLENWECHSEL**

(30) Priorität: 27.07.2015 DE 102015214193
(71) Anmelder: tesa SE, 22848 Norderstedt (DE)
(72) Erfinder: Czerwonatis, Niels, 22393 Hamburg (DE); Götz, Kerstin, 22547 Hamburg (DE); Nootbaar, Jens, 22527 Hamburg (DE); Walper, Marco, 22848 Norderstedt (DE)

(57) **Zusammenfassung**

Die Erfindung betrifft ein Klebeband für den fliegenden Rollenwechsel von auf Rollen aufgewickeltem Flachbahnmaterial,
umfassend eine Trägerschicht mit einer ersten und einer zweiten Oberfläche,
wobei auf der Seite der ersten Oberfläche der Trägerschicht mittelbar oder unmittelbar zumindest teilflächig eine erste Klebmassenschicht vorgesehen ist,
und wobei die zweite Oberfläche der Trägerschicht einen oder mehrere Flächenbereiche aufweist, auf denen eine zweite Klebmassenschicht vorgesehen ist,
dadurch gekennzeichnet, dass
das Klebeband für eine flächige Spaltung geeignete Bereiche ("Sollbruchflächen") aufweist,
indem zumindest die Flächenbereiche der zweiten Oberfläche der Trägerschicht, auf denen die zweite Klebmassenschicht vorgesehen ist, mit einer Oberflächenbeschichtung modifiziert sind,
wobei die Adhäsionskräfte der unteren Klebmassenschicht zur Oberflächenbeschichtung größer sind als die Adhäsionskräfte der Oberflächenbeschichtung zur Trägerschicht, und/oder wobei die Adhäsionskräfte der unteren Klebmassenschicht zur Oberflächenbeschichtung größer sind als die Kohäsionskräfte innerhalb der Oberflächenbeschichtung.

## Beschreibung

Die Erfindung betrifft ein Klebeband für den fliegenden Rollenwechsel von auf Rollen aufgewickeltem Flachbahnmaterial (Spleißverfahren, im Folgenden wie fachintern üblich der Ausdruck "Splice" statt "Spleiß" verwendet), mit klebender Vorderseite und mit einem Hauptträger, auf dessen Rückseite eine Klebmasse vorgesehen ist, die im Spliceverfahren von dem Hauptträger abgespalten werden kann, sowie ein Spliceverfahren für den fliegenden Rollenwechsel von auf Rollen aufgewickelten Flachbahnmaterial, für welches ein derartiges Klebeband geeignet ist.

Der fliegende Rollenwechsel ist in Papierfabriken oder dergleichen ein gängiges Verfahren, um eine alte, fast abgespulte Flachbahnrolle durch eine neue zu ersetzen, ohne die schnell laufenden Maschinen anhalten zu müssen. Dabei werden doppelseitige Selbstklebebänder, sogenannte Fixe, eingesetzt, die einerseits hochklebrig und -tackig sind, andererseits aufgrund ihrer wasserlöslichen Selbstklebmassen und Papierträger beim Wiedereinsatz der Papierabfälle in der Papiermaschine nicht stören. Diese Fixe werden in kunstvoller Weise in Zackenform am Bahnanfang verklebt, eine Prozedur, die erfahrene Fachleute verlangt, wobei für den gesamten Arbeitsvorgang aufgrund der schnell laufenden Maschinen in der Regel nur wenig Zeit verbleibt.

Obgleich diese Technologie bewährt und eingespielt ist, hat sie doch einige Nachteile. So ist Fachpersonal nötig, Hektik ist vorgegeben, und die Verklebungen sind auch relativ dick, da jeweils zwei Papierlagen und das dazwischenklebende Fix das Resultat sind: Ein in der Papierindustrie unerwünschtes Resultat, da es aufgrund der hohen Dicke zu Abrissen, u.a. an Streichmessern in Papierstreichmaschinen kommen kann.

Für diese Spitzenklebung beim fliegenden Rollenwechsel gibt es diverse Produkte im Handel, sogenannte Fixe, die neben einem Papierträger eine wasserlösliche Selbstklebmasse beiderseits beschichtet aufweisen. Solche Klebebänder sind u.a. unter der Bezeichnung tesafix (tesa SE) im Handel.

Eine Verbesserung der Splicevorbereitung und -durchführung konnte durch den Einsatz spezieller Klebebänder geschaffen werden, die einerseits geeignet sind, eine Rollenendverklebung zur Vorbereitung zu garantieren, die auch beim Beschleunigen der Rollen auf ihre Prozessgeschwindigkeit nicht wieder unbeabsichtigt öffnet, die aber eine flächige Sollbruchstelle derart aufweisen, dass die Endverklebung genau in dem Augenblick oder unmittelbar anschließend öffnet, wenn die neue Rolle an die alte, ablaufende Bahn durch eben dieses Klebeband angeklebt wird, somit die neue Flachbahn mit der alten, ablaufenden Flachbahn, mit der sie nun verklebt ist, in den Prozess eingefädelt wird, so dass die Kontinuität des Prozesses sichergestellt ist. Derartige Klebebänder sind etwa solche, die auf der Rückseite ihres Hauptträgers mit mehrschichtigen, einen spaltfähigen Papierträger umfassenden Spaltsystemen ausgerüstet sind und beispielsweise in den Schriften DE 196 28 317 A und DE 199 02 179 A beschrieben werden.

Entsprechende fliegende Rollenwechsel gibt es bei der Herstellung oder Verarbeitung anderer Flachbahnmaterialien, wie beispielweise Folien und dergleichen, wobei zum Teil weiter angepasste Klebebänder eingesetzt werden.

Durch den spezifischen Aufbau solcher Spezialklebebänder, der mehrere Funktionsschichten aufweist, sind solche Klebebänder relativ dick. Dies hat zur Folge, dass die Dicke der Verklebungsstelle der zwei Bahnen miteinander relativ groß ist; wo ansonsten eine Flachbahn durch die Apparatur geführt wird, ist dies im Bereich der Verklebungsstelle eine Abfolge von mindestens zwei Flachbahnen und dem dazwischen angeordneten, die Bahnen verbindendenden Klebeband. Die Dicke handelsüblicher Klebebänder für das Endlosverkleben liegt im Bereich des Spaltsystems (also der Sollbruchstelle) bei üblicherweise ca. 100 bis 200 µm im gespaltenen Zustand. Hinzu kommen die Papierdicken an der Verklebungsstelle, die auch im Bereich einiger 10 bis zu einigen 100 µm liegen können. Daraus ergibt sich die wesentliche Dicke des Papierbahnverbundes im Spliceprozess, da diese Stelle beim Durchlauf in Verarbeitungsmaschinen den ersten Kontakt mit Streichaggregaten, Druckwalzen oder ähnlichem hat, und hier durch Form und Dicke des Splices besondere Gefahr für einen Abriss besteht.

Es wird daher angestrebt, möglichst dünne Splice-Klebebänder einzusetzen. Eine Lösung für ein solches Klebeband wird in der DE 102 10 192 A vorgeschlagen, bei dem ein Klebeband umfassend einen Hauptträger aus Papier, eine Klebmasse auf der Vorderseite und einen dünnen Klebmassenstreifen (statt eines mehrschichtigen Spaltsystems) auf der Rückseite eingesetzt wird. Die Spaltung während des Splicevorganges wird dabei derart realisiert, dass der Hauptträger zumindest in dem Bereich des darunter liegenden Klebmassenstreifens spaltfähig ist und beim Splicen aus dem Hauptträger ein entsprechender Teil des Papiers ausgerissen wird.

Weiter gehört zum Stand der Technik ein Klebeband, bei dem ein Papierträger beidseitig mit einer wasserlöslichen Selbstklebmasse beschichtet ist und bei dem der Papierträger aus einem flächig spaltfähigen Papier besteht. Dieses Klebeband ist in der DE 196 32 689 A1 beschrieben. Es wird ein Papierträger offenbart, der in voller Breite spaltet. Bei dieser Funktionsweise reduziert sich die Höchstzugkraft des gespaltenen Papiers und damit die maximal mögliche zu übertragene Bahnspannung dramatisch. Bei mittig gespaltenen Papieren reduziert sie sich um mindestens 50 %. Für den Fall, dass die Spaltebene nicht mittig ist, kann die Höchstzugkraft auch deutlich unter 50 % reduziert werden.

Beiden vorgenannten Lösungen ist gemein, dass durch das Spalten von Papierträgern wenig glatte Oberflächen entstehen, die zudem eine faserig-ausgefranste Struktur besitzen. Solche faserigen und ausgefransten Strukturen sind nämlich beispielsweise beim Bestreichen oder im Druckwerk nachteilig, da es zu Ablagerungen von Fasern im Druckwerk kommen kann, die letztlich zu Fehldrucken führen, und/oder bereits an der Beschichtungseinheit in der Papierfabrik kann es zu Ablagerungen unter dem Streichaggregat kommen. Solche Ablagerungen können dazu führen, dass der Ausstrich unregelmäßig und fehlerhaft ist, so dass man kein sauberes und einheitliches Strichbild erhält. Dies führt zu Qualitätseinbußen im Produkt.

Aufgabe der Erfindung ist es, ein Klebeband für den fliegenden Rollenwechsel zur Verfügung zu stellen, welches im Bereich der Verklebung der alten und der neuen Bahn eine möglichst geringe Dicke bewirkt, trotzdem die volle Höchstzugkraft zur Aufnahme der maximalen Bahnspannung behält und zu möglichst glatten Oberflächen der Reste der Sollbruchstelle nach dem Spalten führt.

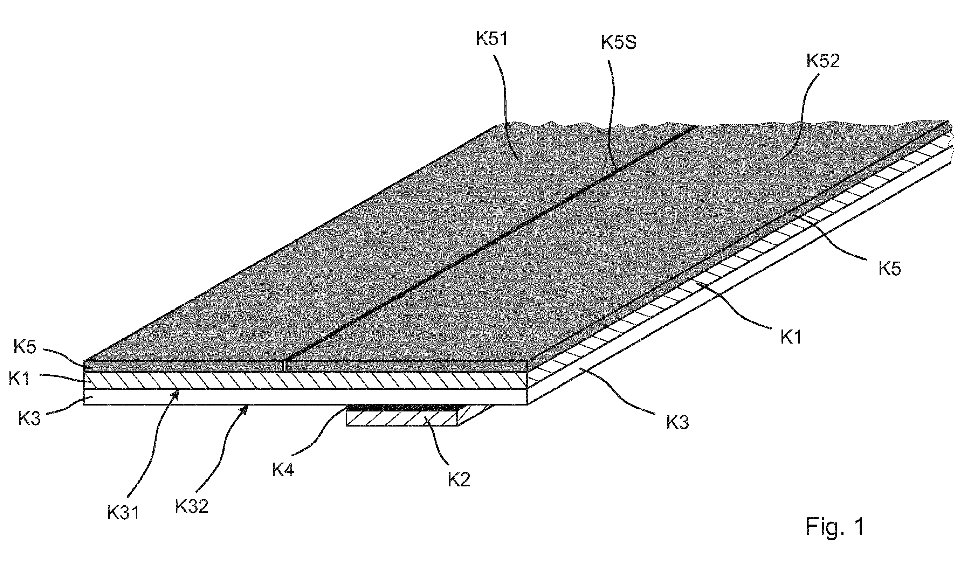

Die Aufgabe konnte überraschend gelöst werden durch die Erfindung, wie sie im Hauptanspruch dargestellt ist. Die Unteransprüche betreffen vorteilhafte Weiterentwicklungen der Erfindung. Weitere Ansprüche betreffen ein Verfahren für den fliegenden Rollenwechsel unter Verwendung eines derartigen Klebebandes. Demgemäß betrifft die Erfindung ein Klebeband K, geeignet für den fliegenden Rollenwechsel von auf Rollen aufgewickeltem Flachbahnmaterial, das eine Trägerschicht (K3) mit einer ersten (K31) und einer zweiten (K32) Oberfläche umfasst, wobei auf der Seite der ersten Oberfläche (K31) der Trägerschicht mittelbar oder unmittelbar zumindest teilflächig zumindest eine erste Klebmassenschicht (K1) vorgesehen ist, und wobei die zweite Oberfläche (K32) der Trägerschicht einen oder mehrere Flächenbereiche aufweist, auf denen eine zweite Klebmassenschicht (K2) vorgesehen ist. Das Klebeband ist erfindungsgemäß dadurch charakterisiert, dass es für eine flächige Spaltung geeignete Bereiche ("Sollbruchflächen") aufweist, die sich dadurch ergeben, dass zumindest die Flächenbereiche der zweiten Oberfläche der Trägerschicht, auf denen die zweite Klebmassenschicht versehen sind, mit einer Oberflächenbeschichtung (K4) modifiziert sind, wobei die Adhäsionskräfte der zweiten Klebmassenschicht (K2) zur Oberflächenbeschichtung (K4) größer sind als die Adhäsionskräfte der Oberflächenbeschichtung (K4) zur Trägerschicht (K3), und/oder wobei die Adhäsionskräfte der zweiten Klebmassenschicht (K2) zur Oberflächenbeschichtung (K4) größer sind als die Kohäsionskräfte innerhalb der Oberflächenbeschichtung (K4). Vergleiche hierzu die Figuren 1 (perspektivische Sicht eines beispielhaften erfindungsgemäßen Klebebandes), 2 (Querschnitt eines beispielhaften erfindungsgemäßen Klebebandes mit teilflächiger Oberflächenbeschichtung) und 3 (Querschnitt eines beispielhaften erfindungsgemäßen Klebebandes mit vollflächiger Oberflächenbeschichtung).

Bei dem erfindungsgemäßen Klebeband sind die erste und die zweite Klebmassenschicht jeweils außenliegende Klebmassenschichten, also insbesondere solche Klebmassenschichten, die während der Anwendung eine Verklebung zu einer jeweiligen Substratoberfläche - bei der Anwendung im Verfahren des fliegenden Rollenwechsels insbesondere eine Verklebung zu einer jeweiligen Flachbahn - zu bewirken vermögen. Die Bezeichnung als außenliegende Klebmassenschichten soll nicht ausschließen, dass die erste Klebmassenschicht und/oder die zweite Klebmassenschicht vor der Anwendung - insbesondere zur besseren Handhabung und/oder Lagerung und/oder zum Schutz der offenen Klebmassenflächen - jeweils mit einer Trennabdeckung (auch als "Liner" oder "Releaseliner" bezeichnet) abgedeckt sein können. Die Trennabdeckung wird dann jeweils entfernt, bevor die offene Klebmassenfläche für die Anwendung benötigt wird.
Als Material für die Trennabdeckung können dabei alle hierfür an sich bekannten trennwirksamen Materialien eingesetzt werden; dabei handelt es sich insbesondere um antiadhäsive Materialien oder antiadhäsiv beschichtete (insbesondere silikonisierte) Materialien, wie beispielweise (gegebenenfalls auch modifizierte) Silikone, silikonisierte Papiere, Glassinepapiere, beschichtete oder unbeschichtete HDPE-Liner (Niederdruck-Polyethylen), beschichtete oder unbeschichtete LDPE-Liner (Hochdruck-Polyethylen), beschichtete oder unbeschichtete MOPP- und BOPP-Liner (monoaxial bzw. biaxial orientiertes Polypropylen), beschichtete oder unbeschichtete PET-Liner (Polyethylenterephthalat) und dergleichen.
Die erste Klebmassenschicht kann Teil eines Mehrschichtverbundes sein oder unmittelbar auf der ersten Oberfläche der Trägerschicht verankert sein. So kann zwischen der Trägerschicht des Klebebandes und der ersten Klebmassenschicht beispielsweise auch eine Schicht vorhanden sein, die das Klebeband durch optische, induktive, elektronische oder andere Detektorsysteme erkennbar ausgestaltet.

Die zweite Klebmassenschicht kann direkt auf der Oberflächenbeschichtung der Trägerschicht des Klebebandes verankert sein oder Teil eines Schichtverbundes sein, der seinerseits aber insbesondere keine eigene Trägerschicht enthält. Solch ein Verbund kann beispielsweise aus zwei Klebeschichten, oder beispielweise aus der zweiten Klebmassenschicht und einer Funktionsschicht, die eine bessere Verankerung auf der Oberflächenbeschichtung der Trägerschicht des Klebebandes bewirkt, bestehen.

Als Trägerschicht im Sinne der vorliegenden Erfindung werden solche Schichten angesehen, die keine Klebmassenschichten sind, die zudem selbsttragend (eigenstabil) ausgestaltet sind; insbesondere solche Schichten, von denen es daher eine wesentliche Funktion ist, einer Klebmassenschicht oder einem Klebmassenschichtenverbund (zusätzliche) Stabilität verleihen. Trägerschichten können insbesondere aus Papier, dünnen Folien (Kunststoffe, Metalle), textilen Materialien, Mehrschichtlaminaten und dergleichen bestehen.
Funktionsschichten sind im Sinne dieser Schrift solche Schichten oder Beschichtungen anderer Schichten, die keinen selbsttragenden Verbund darstellen, sondern insbesondere nur in Verbindung mit weiteren Schichten ihren schichtförmigen Zusammenhalt bewahren; dies können zum Beispiel Primerschichten, Papierstriche, Lackschichten, dünne Metallisierungen (etwa erhältlich durch Sputterverfahren), entsprechende Schichten aus Lösung, Suspension oder dergleichen aufgetragenen, getrockneten chemischen Substanzen und dergleichen sein.

Die Oberflächenbeschichtung der Trägerschicht des Klebebandes besteht zumindest aus einer Funktionsschicht, kann aber auch ein Verbund mehrerer Funktionsschichten sein. Der Bruch der Sollbruchstelle bei der bestimmungsgemäßen Anwendung des Klebebandes wird dadurch bewirkt, dass in den Bereichen, in denen die zweite Klebmassenschicht vorgesehen ist,
- sich die Oberflächenbeschichtung von der Trägerschicht ablöst, und/oder
- die Oberflächenbeschichtung durch Kohäsionsbruch innerhalb einer ihrer Schichten flächig spaltet, und/oder
- sich zumindest eine der Funktionsschichten der Oberflächenbeschichtung von einer zweiten Funktionsschicht der Oberflächenbeschichtung ablöst
und somit eine flächige Spaltung bewirkt wird. Dabei ist das erfindungsgemäße Klebeband insbesondere derart gestaltet, dass alle die Kräfte, die nicht im Sinne zumindest einer der vorstehenden Ausführungen den Bruch bewirken - also insbesondere die Kräfte, die den Zusammenhang der übrigen Schichten miteinander und die den inneren Zusammenhang der Schichten bewirken, die keinen Kohäsionsbruch erleiden -, größer sind als die den Bruch bewirkenden Kräfte (in anderen Worten: Die Stabilität des Klebebandes sollte überall höher sein als in der Sollbruchstelle). In allen Fällen verbleibt zumindest eine Teilschicht der Oberflächenbeschichtung der Trägerschicht des Klebebandes auf der abgelösten zweiten Klebmassenschicht, so dass diese Schicht nichtklebend abgedeckt ist. Damit wird insbesondere vermieden, dass es bei einem Kontakt dieses Bereichs mit Bahnmaterial oder Maschinenoberflächen zu Anhaftungen kommt und damit zu Abrissen der bahn.

Fliegende Rollenwechsel können insbesondere so durchgeführt werden, dass zunächst die Rolle (R) einer neuen Flachbahn (RB) vorbereitet wird, indem der die oberste Wicklung bildende Flachbahnabschnitt (R1) der neuen Flachbahnrolle (R) auf den die zweite Wicklung bildendenden Flachbahnabschnitt (R2) mit einem erfindungsgemäßen Klebeband (K) fixiert wird.

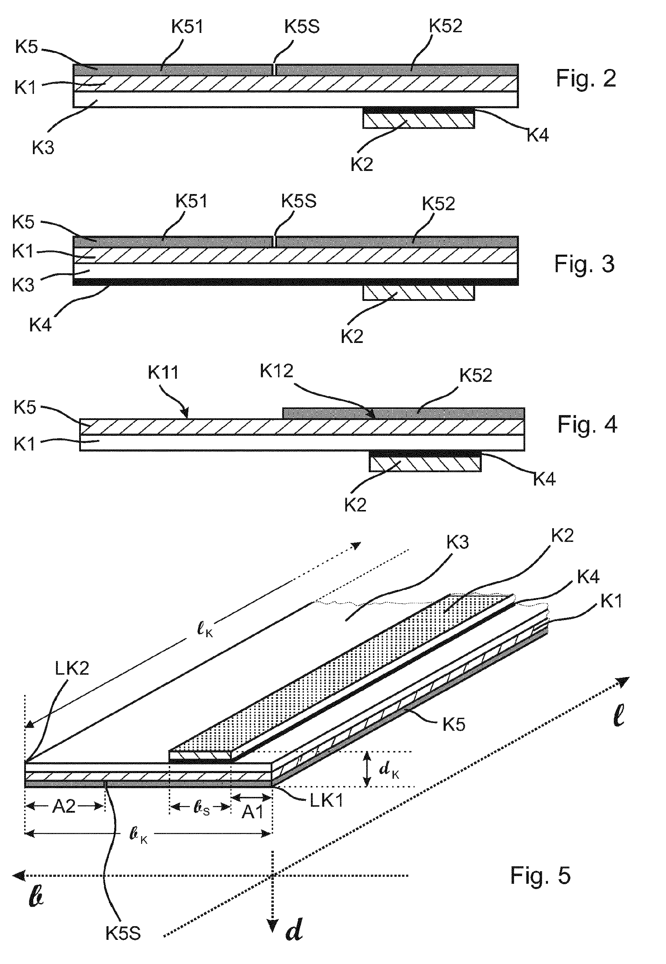

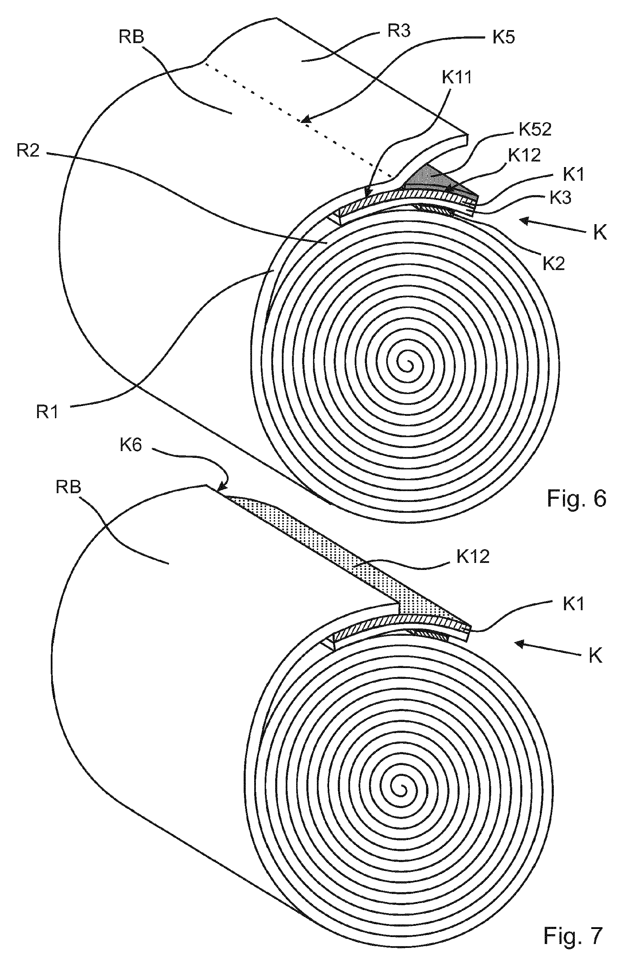

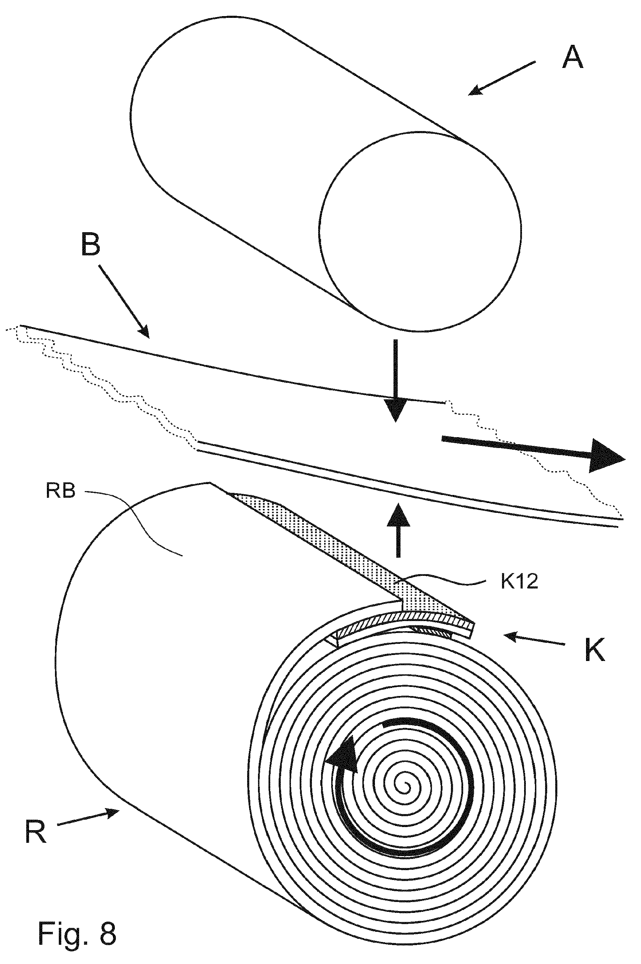

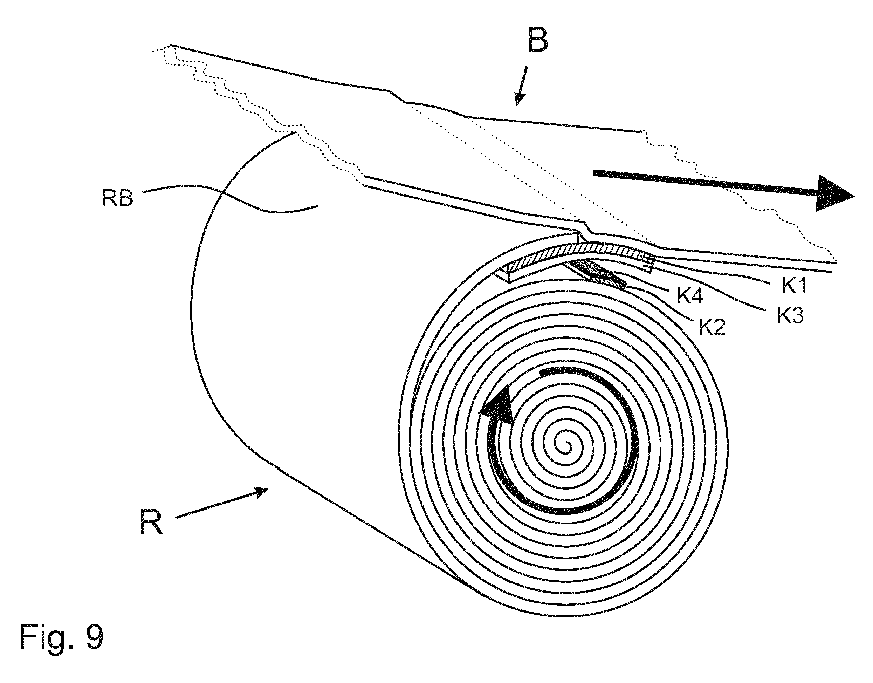

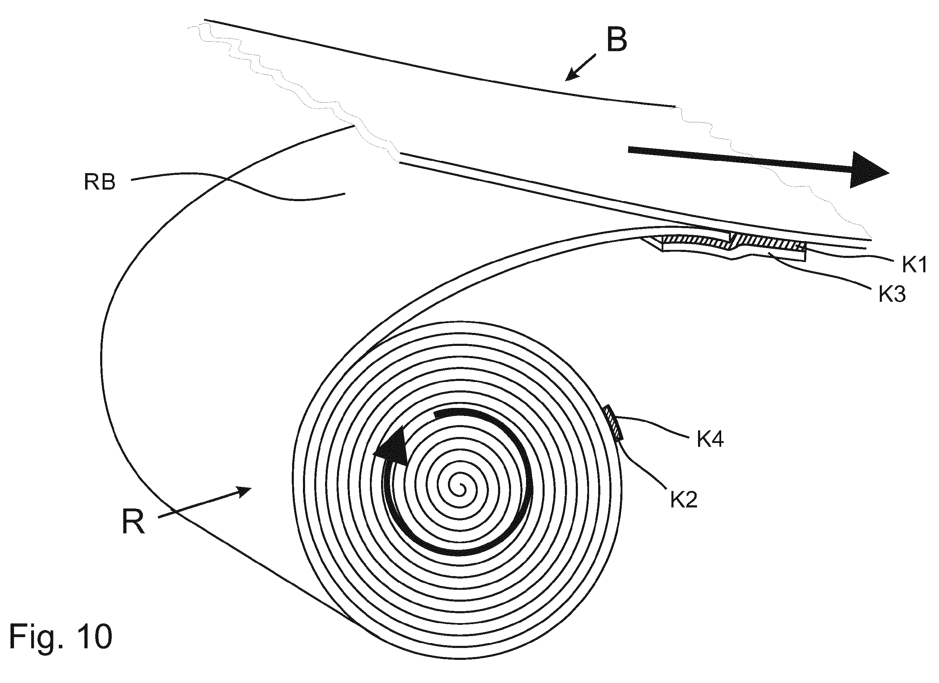

Hierzu wird die erste Klebmassenschicht (K1) des erfindungsgemäßen Klebebandes nur teilweise freigelegt. Dies kann geschehen, indem eine darauf befindliche Trennabdeckung (K5) einen Schlitz oder eine Perforation (K5S) in Längsrichtung aufweist, so dass die Trennabdeckung in zwei Teile (K51, K52) geteilt wird bzw. eine Sollbruchstelle zur Erzeugung zweier Teile (K51, K52) aufweist, und dann nur ein Teil der Trennabdeckung (K51) abgezogen wird, so dass ein klebender (K11) und ein nichtklebender (K12) - weil abgedeckter -, jeweils in Längsrichtung des Klebebandes (K) verlaufender Bereich der ersten Klebmasse (K1) verbleibt (vgl. hierzu Fig. 4). Dieses Klebeband wird nun genutzt, um den die oberste Wicklung (R1) bildende Flachbahnabschnitt einer neuen Rolle - die oberste Flachbahnlage - auf dem die zweitoberste Wicklung (R2) bildende Flachbahnabschnitt - die zweite Flachbahnlage - einer neuen Rolle (R) zu verkleben, etwa indem zum einen der freie Bereich der ersten Klebmassenschicht (K1) in gerader Linie unter den Endbereich der neuen Flachbahn (RB) geklebt wird und zum anderen die zweite Klebmassenschicht (K2) auf den darunter liegende Flachbahnabschnitt (R2) geklebt wird. Das Ergebnis dieses Vorgehens zeigt Figur 6..
Die überstehende Fahne (R3) des auf die erste Klebmassenschicht (K1) verklebten Flachbahnabschnitts (R1) wird dann vorteilhaft im Wesentlichen an der Kante (K5) zum durch den verbliebenen Teil der Trennabdeckung (K52) abgedeckten Bereich (K12) der ersten Klebmassenschicht (K1) abgelängt - abgeschnitten, abgerissen oder dergleichen -, so dass das dann entstandene Ende (K6) der Flachbahn im Wesentlichen an der verbliebenen Trennabdeckung (K52) der ersten Klebmassenschicht (K1) des Spliceklebebandes (K) angrenzt. Dann kann der noch vorhandene Teil (K52) der Trennabdeckung abgezogen werden, so dass eine offenliegende Klebmassenoberfläche (K12) vorliegt, die zur Verklebung mit der ablaufenden alten Flachbahn (B) genutzt werden kann (vgl. zum Ergebnis dieses Vorgehens die Darstellung einer derart vorbereiteten Rolle in Figur 7). Die erste Klebmassenschicht wird daher im Rahmen dieser Schrift auch als vorderseitige Klebmassenschicht bezeichnet.
Den nächsten Schritt des Spliceverfahrens zeigt Figur 8. Die so vorbereitete Rolle (R) wird dann neben eine fast gänzlich abgespulte zu ersetzende alte Rolle (in den Figuren nicht dargestellt) platziert und auf die im Wesentlichen gleiche Umfangsgeschwindigkeit wie diese beschleunigt. Daraufhin wird sie gegen die alte Flachbahn (B) gedrückt (beispielsweise unter Zuhilfenahme eines Andruckzylinders (A)), wobei der offenliegende Flächenbereich (K12) der vorderseitigen Klebmassenschicht (K1) des Klebebandes (K) mit der alten Bahn (B) bei im Wesentlichen gleichen Geschwindigkeiten der Bahnen verklebt.
Zugleich oder unmittelbar nach der Verklebung mit der alten Bahn (B) öffnet das Klebeband (K) die Fixierung der obersten (R1) mit der zweiten (R2) Lage der neuen Rolle (R) durch geeignete Sollbruchflächen innerhalb des Klebebandes (K) (vgl. Figur 9), so dass die neue Bahn (RB) mit der alten Bahn (B), an die sie angeklebt ist, in den Prozess eingefädelt werden kann (vgl. Fig. 10). Hierdurch ist ein kontinuierlicher Prozessablauf gesichert.
Die Verwendung der in den Figuren gezeigten konkreten Ausführungsformen sowie der verwendeten Bezugszeichen erfolgt für das erfindungsgemäße Verfahren nur beispielhaft zu erläuternden Zwecken und soll die Erfindung nicht hierauf beschränken.

Das erfindungsgemäße Klebeband ist für einen solchen Prozess besonders geeignet. Wird mit dem erfindungsgemäßen Klebeband ein fliegender Rollenwechsel durchgeführt, so kann während des Prozesses eine flächige Spaltung bewirkt werden, indem die zweite Klebmassenschicht in den Bereichen, in denen sich zwischen ihr und der zweiten Trägeroberfläche die Oberflächenbeschichtung befindet, letztere entweder ihre Verbindung zu der zweiten Oberfläche der Trägerschicht löst und somit von dieser abspaltet - durch einen Adhäsionsbruch - oder aber indem in den Bereichen, in denen sich zwischen der zweiten Klebmassenschicht und der zweiten Trägeroberfläche eine flächige Spaltung innerhalb der Oberflächenbeschichtung stattfindet - durch einen Kohäsionsbruch und/oder Adhäsionsbruch zwischen einzelnen Funktionsschichten der Oberflächenbeschichtung -, so dass eine Restschicht der Oberflächenbeschichtung in Verbindung mit der Trägeroberfläche verbleibt und eine weitere Restschicht der Oberflächenbeschichtung an der zweiten Klebmassenschicht verbleibt.
In beiden Fällen deckt zumindest eine Teilschicht der Oberflächenbeschichtung das auf der neuen Bahn verklebte Klebeband ab, so dass dort keine klebenden Bereiche offenliegend verbleiben (in der Fig. 9 Bezugszeichen K4).

Vorteilhaft sollte die Sollbruchstelle die schwächsten Zusammenhaltekräfte des erfindunsgsgemäßen Spliceklebebandes aufweisen, damit beim Öffnen während des Spliceprozesses das Klebeband an genau dieser Stelle bricht (also im Sinne des vorstehend erwähnten Adhäsionsbruch zwischen der Oberflächenbeschichtung und der Trägerschicht beziehungsweise im Sinne des vorstehend erwähnten Kohäsionsbruchs innerhalb der Oberflächenbeschichtung). Wie schon definiert, sollte die Verankerung der zweiten Selbstklebmasse auf der Oberflächenbeschichtung (direkt oder mittels weiterer dort ggf. befindlicher Klebmassen- und/oder Funktionsschichten) zumindest stärker sein als die schwächere der beiden vorgenannten Zusammenhaltekräfte, wie dies durch die erfindungsgemäß definierten Kräfteverhältnisse (siehe Hauptanspruch) bedingt ist. Vorteilhaft sollten aber auch alle übrigen Zusammenhaltekräfte zwischen und innerhalb der einzelnen Schichten, die das Klebeband bilden - also die Adhäsionskräfte zwischen den übrigen Schichtoberflächen, wie insbesondere die Adhäsionskräfte zwischen der ersten Oberfläche des Trägers und der ersten Selbstklebmassenschicht (unmittelbar oder durch dort ggf. vorhandene weitere Schichten) und die Kohäsionskräfte innerhalb der übrigen Schichten - größer sein als diejenige Kräfte - die Adhäsionskräfte der Oberflächenbeschichtung zur Trägerschicht beziehungsweise die Kohäsionskräfte innerhalb der Oberflächenbeschichtung -, die zum Spalten der Sollbruchfläche führen, damit es nicht zu einem unerwünschten Spalten an einer anderen Stelle als der Sollbruchfläche kommt.

Das erfindungsgemäße Klebeband kann sehr dünn ausgestaltet werden. Das erfindungsgemäße Klebeband ermöglicht insbesondere, dass die Verklebungsstelle und/oder der nach dem Spalten auf der neuen Bahn verbleibende Rest dünner realisiert werden kann, als dies bei den derzeit auf dem Markt befindlichen Systemen der Fall ist. Hierdurch wird die Gefahr von unbeabsichtigten Prozessausfällen - wie beispielsweise Bahnabrissen - deutlich minimiert.

Insbesondere vorteilhaft ist ein Klebeband, bei dem außer der erfindungsgemäß definierten Trägerschicht, der ersten und der zweiten Klebmassenschicht und der Oberflächenbeschichtung keine weiteren Klebmassen- und Trägerschichten vorhanden sind; wobei optional - nur wenige µm dicke - Funktionsschichten, wie Pigmentschichten und/oder Verankerungsschichten (wie etwa Primerungen), oder beispielsweise Metallfolienschichten vorhanden sein können.
Da der Hauptträger nicht beschädigt wird, werden zudem die Höchstzugkräfte nicht verringert (wie dies bei den Klebebändern der DE 102 10 192 A und der DE 196 32 689 A der Fall wäre), und es kommt zu keinen unebenen Oberflächen, etwa durch ausgerissene Papierfasern (das wäre bei den Klebebändern der beiden vorgenannten Schriften ebenfalls problematisch).

### Aufbau des erfindungsgemäßen Klebebandes

Zur Beschreibung des erfindungsgemäßen Klebebandes werden beispielhaft zu erläuternden Zwecken die Figuren 1 bis 4 verwendet, ohne dass durch die Wahl der verwendeten konkreten Ausführungsformen und Bezugszeichen die Erfindung auf diese Ausführungsformen beschränkt werden soll.

Das erfindungsgemäße Klebeband (K) weist einen Hauptträger (K3) und einen auf einer ersten Oberfläche (K31) des Hauptträgers (K3) (wegen der Positionierung des Klebebandes bei der Anwendung im Spliceprozess als Vorderseite bezeichnet) mittelbar oder unmittelbar vorgesehene erste Klebmassenschicht (K1) auf. Unmittelbar bedeutet in diesem Zusammenhang, dass die erste Klebmassenschicht (K1) direkt auf dem Trägermaterial (K3) aufliegt. Mittelbar bedeutet, dass zwischen der Trägerschicht (K3) und der ersten Klebmassenschicht (K1) eine oder mehrere weitere Schichten, wie beispielsweise Funktionsschichten - etwa für eine Detektierung des Klebebandes durch entsprechende im Spliceprozess vorgesehene Detektoren geeignete Schichten, wie Lackschichten, Metallschichten (z.B. Aluminiumschichten) oder andere funktionelle Additive (wie Farbstoffe, Metallpulver, Getter usw.) enthaltende Schichten -, weitere Klebmassenschichten, Folienschichten, Schichten aus textilen Materialien, Schichten zur Haftverbesserung zwischen der Trägeroberfläche und der ersten Klebmassenschicht (wie beispielsweise Primerschichten) und dergleichen vorgesehen sein können.
Die Figuren 1 und 2 zeigen beispielhaft Ausführungsvarianten mit einer Oberflächenbeschichtung (K4), die auf den Bereich der zweiten Klebmassenschicht (K2) beschränkt ist; die Figur 3 zeigt beispielhaft eine Oberflächenbeschichtung (K4), die vollflächig auf der Trägerschicht (K3) vorgesehen ist.

Da die Spaltung des Spliceklebebandes in der Oberflächenbeschichtung der Trägerschicht oder zwischen dieser Oberflächenbeschichtung und der Trägerschicht, nicht aber innerhalb der Trägerschicht stattfindet, wie dies bei Klebebändern nach dem Stand der Technik häufig der Fall ist, ist man in Bezug auf die Wahl des Materials der Trägerschicht grundsätzlich nicht eingeschränkt. Voraussetzung ist lediglich, dass sich auf der Trägerschicht eine Oberflächenbeschichtung vorsehen lässt, die entweder hinreichend geringe Adhäsionskräfte zur Träger-Oberfläche aufweist oder hinreichend geringe innere Kohäsionskräfte aufweist, so dass die Haftung der zweiten Selbstklebmassenschicht auf dieser Oberflächenbeschichtung höher ist als zumindest eine der vorgenannten Kräfte.
So lässt sich die Trägerschicht beispielweise in Hinblick auf die Stabilität für die aufzunehmenden Zugkräfte optimieren. Als besonders vorteilhaft haben sich Trägermaterialien herausgestellt, deren Höchstzugkraft - also die Zugkraft, der sie maximal standhalten können, bevor sie reißen - in der Richtung, die im fertigen Klebebandprodukt der Anwendungsrichtung entspricht (in der Regel die Querrichtung des Klebebandes), mindestens 10 N/cm betragen, insbesondere im Bereich zwischen 10 und 100 N/cm liegen. Die Werte sind bezogen auf die Messung nach DIN EN 14410 (DIN EN 14410:2003), Variante A, Einspannlänge 100 mm, Geschwindigkeit 300 mm/min, Messproben 200 mm x 15 mm, angegebene Messwerte normiert auf 10 mm (1 cm) Probenbreite.

Als Trägerschichten können grundsätzlich Papiere, Folien - z.B. aus Kunststoffen -, Vliese, Mehrschichtlaminate - z.B. aus mehreren Papieren oder mehreren Folienmaterialien oder Papier(en) und Folie(n) - eingesetzt werden. Laminate aus zumindest einer Schicht eines üblichen Trägerschichtmaterials - wie Papier und/oder Kunststoff - mit einer Metallfolienschicht (wie insbesondere Aluminium) können ebenfalls vorteilhaft eingesetzt werden.

In einer sehr bevorzugten Vorgehensweise handelt es sich bei der Trägerschicht um eine Papierschicht. Als Oberflächenbeschichtung kann auf die Oberfläche des Papiers eine Schicht einer chemischen Substanz aufgebracht sein, zum Beispiel ein Bindemittel.
Die chemische Substanz kann beispielweise in Form einer Lösung oder einer Dispersion aufgebracht und danach getrocknet werden, so dass eine trockene Schicht (zum Beispiel durchgängiger Film oder poröse Beschichtung) vorliegt, die auf der Trägeroberfläche aufliegt. Durch Wahl der Aufbringungsart, der chemischen Substanz und der Konzentration der Lösung, Suspension oder Dispersion kann die Adhäsion des Films zur Trägeroberfläche beeinflusst werden.
Es ist auch möglich, dass die Lösung, Suspension bzw. Dispersion in die Oberfläche der Trägerschicht eindringt. Dies kann insbesondere für die Ausführungsformen von Interesse sein, bei der die Sollbruchstelle innerhalb der Oberflächenbeschichtung vorliegt und diese im Spliceverfahren durch einen Kohäsionsbruch spaltet, ist aber nicht hierauf beschränkt.

In einer sehr bevorzugten Ausführungsvariante der Erfindung wird als Trägerschicht ein gestrichenes Papier eingesetzt oder eine solche Trägerschicht, die an ihrer einen Oberfläche ein gestrichenes Papier aufweist.
Um eine geschlossene Oberfläche und eine bessere Bedruckbarkeit zu erzielen, wird auf Papiere - wie etwa Streichrohpapiere - häufig eine Streichmasse (auch als Streichfarbe bezeichnet) gleichmäßig aufgebracht, etwa durch Rakel-, Walzen-, Bürsten-, Düsenbeschichtung (beispielweise Luftdüsenbeschichtung), oder beispielsweise durch Vorhangguss ("Curtain Coating"). Die so erhaltene Oberflächenbeschichtung wird auch als "Strich" bezeichnet, das behandelte Papier als "gestrichenes Papier". Papiere können ein- oder beidseitig gestrichen sein.
Erfindungsgemäß eingesetzte Streichfarben setzen sich üblicherweise zusammen aus mehreren der folgenden Hauptbestandteile: Wasser, Pigmente (in der Regel mineralische Weißpigmente bzw. Weißminerale), Dispergiermittel für Pigmente (in der Regel Polyacrylate), Bindemittel (in der Regel synthetische Acrylat- oder Styrol-Butadien-Copolymere), Stärke, Verdickungsmittel (in der Regel Methylcellulose-Derivate oder Acrylat-Copolymere), Additive zur Regulierung der Viskosität und des Wasserrückhaltevermögens, Kalandrierhilfsmittel (z.B. Wachse), Trennmittel (zum Beispiel Polyvinylalkohol), Hilfsmittel zur Verminderung des Nassabriebes, Nuancierfarbstoffe (zum Beispiel optische Aufheller), Schaumverhütungsmittel, Biozide.
Der Feststoffanteil beträgt in einer Streichfarbe üblicherweise etwa 65 bis 70 Gew.%, davon fast 90 % Pigmente. Der Bindemittelanteil liegt üblicherweise bei 10 bis 15 Gew.% (bezogen auf die Trockensubstanz), über den Bindemittelanteil lassen sich insbesondere die für den Spaltvorgang in der Sollbruchstelle relevanten Eigenschaften beeinflussen (wie beispielsweise die Neigung zu adhäsiver oder kohäsiver Trennung usw.). Alle anderen Additive werden üblicherweise in geringen Konzentrationen (insbesondere unter 1 Gew.%) zugegeben. Die Auswahl der Pigmente kommerziell erhältlicher Papiere richtet sich nach den Qualitätsanforderungen der gestrichenen Papiere, zum Beispiel Weiße, Opazität, Glätte, Glanz, Rupffestigkeit, Bedruckbarkeit.

Als Material für die Streichmasse wird erfindungsgemäß insbesondere vorteilhaft eine chemische Zusammensetzung verwendet, deren Hauptbestandteil ein oder mehrere Mineralien - wie beispielweise Kreide (Calciumcarbonat), Talkum, Porzellanerde (Kaolin, zum Beispiel China Clay) -, ein oder mehrere Proteinabkömmlinge - wie beispielsweise Kasein -, ein oder mehrere Polysaccharide - wie beispielweise Stärke -, ein oder mehrere Kunststoffpartikeln oder eine Mischung zweier oder mehrerer Vertreter der vorgenannten Substanzen ist. Weiterhin können zusätzlich oder stattdessen Spezialpigmente, wie Satinweiß (Calciumaluminatsulfat) oder calcinierte Clays eingesetzt werden.

Als Bestandteil der chemische Zusammensetzung für die Streichmasse können insbesondere zumindest zum Teil, bevorzugt als Hauptbestandteil, also zu mehr als 50 %, weiter bevorzugt auch ausschließlich, solche Komponenten ausgewählt werden, die blättchenförmig und/oder schichtförmig vorliegen. Dies lässt sich insbesondere vorteilhaft durch Wahl geeigneter Mineralien realisieren. Blättchen- bzw. schichtförmige Substanzen, insbesondere Mineralien, haben eine solche Struktur, dass die Wechselwirkungen zwischen den Bausteinen nicht in allen Dimensionen vergleichbar, sondern innerhalb einer Ebene (Schicht) größer als zwischen den Ebenen sind (Definition nach Römpp). Die unterschiedliche Wechselwirkung zeigt sich in unterschiedlichen Atomabständen und führt zu einer meist blätterigen Spaltbarkeit. Bekannte Beispiele für solche Verbindungen sind Graphit, Montmorillonit und Glimmer. Die gleitfähigen Schichten, die entweder eben, wie in Graphit, oder gewellt, wie in Phyllosilicaten, sind, können leicht parallel gegeneinander verschoben werden. Die Wahl blättchen- bzw. schichtförmiger Bestandteile der Streichmasse kann zu einer besonders guten Regulierbarkeit der Spaltbarkeit im Sinne der erfinderischen Lehre genutzt werden.

Besonders vorteilhaft werden Streichmassen auf Basis von Kaolin, insbesondere in Blättchenform, und/oder auf Basis von Titandioxid eingesetzt, da sich hierfür eine besonders gute Verträglichkeit mit den Klebmassen gezeigt hat.
Erfindungsgemäß können hervorragend solche ein- oder beidseitig gestrichenen Papiere eingesetzt werden. Da die Grenzfläche zwischen Papier und Strich oder der Strich selbst die Sollbruchfläche des Systems darstellt, ist es vorteilhaft, ein nur einseitig gestrichenes Papier zu wählen.

Für das Trägermaterial können handelsübliche mit Strich versehene Papiere eingesetzt werden, deren Strich im Laufe des Spliceprozesses an den mit einer zweiten Klebmasse versehenen Oberflächen des Trägers abgespalten werden kann.
Alternativ können ungestrichene Papiere jedoch auch erst für den Einsatz als Trägermaterial für das erfindungsgemäße Klebeband mit einem Strich versehen werden, oder es wird ein bereits mit einem Strich versehenes Papier mit einer weiteren Oberflächenbeschichtung versehen, wobei die Spaltung während des Spliceprozesses insbesondere zwischen dem ursprünglichen - ersten - Strich und der weiteren Oberflächenbeschichtung stattfinden kann.
Auch wenn die Spaltung - wie vorstehend ausgeführt - zwischen dem ersten Strich und der Trägeroberfläche stattfindet, kann es vorteilhaft sein, durch eine weitere Behandlung der gestrichenen Oberfläche die Verankerung der zweiten Klebmassenschicht und dem Strich zu erhöhen, insbesondere durch physikalische Methoden wie Corona- oder Plasmabehandlung oder durch chemische Methoden wie Primerung.

Als chemische Substanz für die Oberflächenbeschichtung kommen weiterhin vorteilhaft auch solche chemischen Zusammensetzungen in Frage, wie sie als Kaschiermassen beispielweise in der Schriften EP 1 076 026 A und EP 2 116 581 A beschrieben sind. Solche Kaschiermassen enthalten üblicherweise neben einem Binder schwach trennwirksame und bei Bedarf auch elastifizierende Zusätze. Durch Wahl von Art und Menge des Binders können die Spalteigenschaften (insbesondere die Tendenz zu kohäsiven oder adhäsiven Bruch) vorteilhaft beeinflusst werden.
Eine erste erfindungsgemäß hervorragend einsetzbare Zusammensetzung, wie sie die EP 1 076 026 A beschreibt, enthält neben einem Binder schwach trennwirksame silikonfreie und bei Bedarf auch elastifizierende Zusätze. Als Binder können zum Beispiel modifizierte Stärken verwendet werden, oder Bindemittel, wie sie für Nassklebebänder seit langem in Gebrauch sind. Als Trennmittel können zum Beispiel Talkum, Stearylderivate wie Ca-Stearat oder Dispersionen von - insbesondere silikon- und fluorfreien - polymeren Trennmitteln, wie z.B. Dispersionen auf Basis von Copolymeren aus Stearylmethacrylat oder Stearylderivaten der Maleinsäure mit Styrol, eingesetzt werden. Als Elastifiziermittel, die optional zugesetzt werden können, können zum Beispiel wasserlösliche Polyglykole dienen. Insbesondere wässrige Zubereitungen mit 10 bis 90 Gew.-% Bindemittel und 10 bis 90 Gew.-% Trennmittel sowie bis zu 60 Gew.-% Elastifiziermittel können als Masse zur Herstellung der Oberflächenbeschichtung verwendet werden. Bevorzugt werden als Bindemittel Stärkederivate, zum Beinspiel anionische Kartoffelstärke, in Anteilen von 30 bis 70 Gew.-% eingesetzt. Als Trennmittel werden vorzugsweise Talkum, Ca-Stearat und/oder trennwirksame Copolymere mit Stearylgruppen in Anteilen von 30 bis 80 Gew.% verwendet. Zur Elastifizierung haben sich - insbesondere wasserlösliche -Polypropylen- oder Polyethylenglykole vorzugsweise in Mengen zwischen 0 bis 15 Gew.-% als gut geeignet erwiesen. Dabei werden die höher molekularen, bei Raumtemperatur festen Produkte vorrangig verwendet. Weitere in größeren Anteilen gut einsetzbare Elastifizierungsmittel sind Gummi Arabicum und Kunststoffe mit ähnlichem Eigenschaftsprofil. Der Masse können Füllstoffe und/oder Verdickungsmittel zugesetzt sein, insbesondere in einem Anteil bis zu 30 Gew.-%.

Eine weitere erfindungsgemäß hervorragend zur Erzeugung der Oberflächenbeschichtung einsetzbare Zusammensetzung umfasst zumindest eine Polysaccharidkomponente und eine Tensidkomponente. Solche Zusammensetzungen sind in der EP 2 116 581 A beschrieben und lassen sich auch für die vorliegende Erfindung gut nutzen. Als Zusammensetzung für die Oberflächenbeschichtung wird dabei eine solche Masse eingesetzt, die neben einem Bindemittel, insbesondere einer Polysaccharidkomponente, zumindest eine Tensidkomponente umfasst, die insbesondere als Trennmittel dient. Die Tensidkomponente kann ein einziges Tensid sein, es kann aber auch eine Tensidkomponente aus zwei oder mehreren Tensiden eingesetzt werden. Die Zusammensetzung kann bei Bedarf vorteilhaft weitere Komponenten, wie insbesondere auch elastifizierende Zusätze (im Folgenden auch Elastifiziermittel) umfassen. Die Polysaccharidkomponente ist in einer sehr bevorzugten Vorgehensweise Stärke, Gummi Arabicum oder Derivate der vorgenannten Verbindungen. Die Bindemittelkomponente kann weiterhin auch beispielsweise ein Stearat, insbesondere Magnesium- und Kalziumstearat, sein. Die Bindemittelkomponente kann auch derart zusammengesetzt sein, dass eine Mischung aus Stärke mit einem oder mehreren weiteren Bindemitteln eingesetzt wird. Erfindungsgemäß besonders bevorzugte Zusammensetzungen haben einen Polysaccharidanteil von bis zu 98 Gew.-%, besonders bevorzugt von bis zu 85 bis 95 Gew.-%, noch besser von 90 bis 95 Gew.-%. Besonders bevorzugt lassen sich Stärkederivate einsetzen, insbesondere Hydroxypropylether auf Basis von Kartoffelstärke. Eine solche Stärke ist beispielsweise erhältlich von der Firma Emslandstärke unter der Bezeichnung Emsol K55. Der Tensidgehalt beträgt sehr bevorzugt 2 bis 20, besser 5 bis 15, am besten 5 bis 10 Gew.-%. Die vorstehenden Anteilsangaben beziehen sich sowohl für die Polysaccharidkomponente als auch für die Tensidkomponente auf die Mischung aus Tensid und Polysaccharid, und zwar jeweils in Form der auf den Feststoffanteil bezogenen Menge. Weiterhin ist noch Lösungsmittel, insbesondere Wasser, zugegen, bevorzugt in Anteilen von 50 bis 80 %. Insbesondere kann man derart vorgehen, indem man das feste Tensid in eine 20 bis 40 %ige wässrige Lösung der Polysaccharidkomponente gibt. Als weitere Additive können auch hier beispielsweise Talkum, Ca-Stearat und/oder trennwirksame Copolymere mit Stearylgruppen in Anteilen von 30 bis 80 Gew. % verwendet. Zur Elastifizierung haben sich Polypropylen- oder Polyethylenglykole vorzugsweise in Mengen zwischen 0 bis 15 Gew.% als gut geeignet erwiesen. Dabei werden die höher molekularen, bei Raumtemperatur festen Produkte vorrangig verwendet. Weitere in größeren Anteilen gut einsetzbare Elastifizierungsmittel sind Gummi Arabicum und Kunststoffe mit ähnlichem Eigenschaftsprofil.

Je nach verwendeter Zusammensetzung für den Strich oder die sonstige Oberflächenbeschichtung kann deren Dicke (das Auftragsgewicht) variieren. Es hat sich als vorteilhaft herausgestellt, wenn das Flächengewicht der Oberflächenbeschichtung 1 bis 25 g/m², bezogen auf die modifizierten Bereiche, beträgt (das bedeutet, dass zur Bestimmung des Flächengewichts nur die Flächen herangezogen werden sollen, die tatsächlich mit einer Oberflächenbeschichtung versehen sind).

Das erfindungsgemäße Klebeband weist wie vorstehend bereits dargelegt mindestens zwei selbstklebende Schichten auf, nämlich eine erste Klebmassenschicht (K1), die im Spliceprozess auf der Vorderseite (K31) des Hauptträgers (K3) vorliegt (und daher im Rahmen dieser Schrift auch als "vorderseitige Klebmassenschicht" bezeichnet wird), sowie zumindest eine zweite Klebmassenschicht (K2), die bei der vorbereiteten Rolle und im Spliceprozess auf der Rückseite (K32) des Hauptträgers (K3) angeordnet ist (und daher im Rahmen dieser Schrift auch als "rückseitige Klebmassenschicht" bezeichnet wird).

In sehr bevorzugter Weise werden für die erste Klebmassenschicht und/oder für die zweite Klebmassenschicht Selbstklebmassen verwendet. Als Selbstklebmassen - auch als Haftklebmassen, englisch: PSA = "pressure sensitive adhesives" bezeichnet - werden insbesondere solche polymeren Massen angesehen, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen, hier insbesondere an den Flachbahnmaterialien, bei Kontakt anhaften, insbesondere sofort anhaften (einen sogenannten "Tack" [Klebrigkeit oder Anfassklebrigkeit] aufweisen). Sie sind in der Lage, bereits bei der Anwendungstemperatur ohne eine Aktivierung durch Lösemittel oder durch Wärme - üblicherweise aber durch den Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können. Hierfür wesentliche Einflussparameter sind unter anderem der Druck sowie die Kontaktzeit. Die besonderen Eigenschaften der Haftklebmassen gehen unter anderem insbesondere auf deren viskoelastische Eigenschaften zurück.

Die für die vorderseitige Selbstklebeschicht verwendete Klebmasse wird bevorzugt mit einem hohen Tack (Anfassklebrigkeit) gewählt, während für das rückseitige System vorteilhaft eine scherfeste (Selbst-)Klebmasse eingesetzt wird.
In einer sehr bevorzugten Ausführungsform der Erfindung werden als Selbstklebmassen solche Systeme auf Acrylatbasis eingesetzt, beispielsweise als Reinacrylat-Klebmassen (Homopolymere und Copolymere, jeweils ausschließlich auf Basis von Acrylat- und/oder Methacrylatmonomeren; sogenannte 100-%-Systeme), als Klebmassen auf Basis von Copolymeren aus acrylischen Monomeren - Acrylate, Methacrylate - und nicht acrylischen Monomeren, oder als Klebmassen auf Basis von Abmischungen, enthaltend zumindest zwei Vertreter aus der Liste umfassend Rein-Polyacrylate, Copolymere aus acrylischen Monomeren und nicht acrylischen Monomeren sowie (Co-)Polymere nur aus nicht-acrylischen Monomeren. Es können vorteilhaft sowohl wasserlösliche als auch wasserunlösliche Acrylate eingesetzt werden. Insbesondere vorteilhaft sind auch in Wasser polymerisierte Acrylate (Waterborne-Systeme) einsetzbar.
Weiterhin lassen sich auch Natur- und Synthesekautschukmassen, Klebemassen auf Silikonbasis als auch Dispersionen der vorstehend beschriebenen Verbindungen einsetzen.
Gut einsetzbar sind auch Mischungen (Blends) verschiedener Typen von Haftklebemassen, etwa beispielsweise Blends von kautschukbasierten Klebemassen (Naturkautschuk und/oder Synthesekautschuk) mit Acrylatklebemassen oder Blends aus Naturkautschuk mit Synthesekautschuk. Auch Blends aus Silikonsystemen mit Kautschuksystemen (Naturkautschuk und/oder Synthesekautschuk) und/oder Acrylatsystemen sind einsetzbar.
Es sei darauf verwiesen, dass prinzipiell alle Basistypen von Haftklebmassen, welche für derartige Verklebungen geeignet sind, eingesetzt werden können. Vorteilhaft werden repulpierbare - insbesondere nach Meßmethode TAPPI UM 213 (TAPPI Useful Methods 213, TAPPI 1991, ISBN 0898522064) repulpierbare - Klebemassen eingesetzt, also solche Klebemassen, die bei der Wiederaufbereitung des Flachbahnmaterials, insbesondere von Papier, weitgehend oder vollständig in die Pulpe eingebracht werden können, also in den in Wasser gelösten beziehungsweise aufgeschwemmten Papier- oder Faserbrei.

Klebemassen, die auch im Sinne der hier beschriebenen Erfindung hervorragend eingesetzt werden können, beschreiben beispielweise die Schriften EP 655 490 A, nämlich insbesondere repulpierbare Haftklebemassen auf Basis von Polyacrylaten umfassend Pfropfpolymere; EP 1 489 153 A, nämlich insbesondere repulpierbare Haftklebemassen umfassend Blockcopolymere auf Polyacrylatbasis; EP 1 462 480 A, nämlich insbesondere Haftklebemassen auf Acrylatbasis mit gleichzeitig hohem Tack und hoher Scherfestigkeit; EP 2 166 051 A und EP 1 935 956 A, nämlich insbesondere repulpierbare Haftklebemassen umfassend Additive - wie beispielsweise Phosphate oder Orthophosphorsäure -, die Erdalkaliionen binden können und insbesondere zu einer erhöhten Stabilität gegenüber calciumcarbonathaltigen Papieren führen; WO 03/20623 A, nämlich insbesondere Haftklebemasen mit erhöhter Scherfestigkeit insbesondere für die Prozesse mit Kalandern; EP 2 062 952, nämlich insbesondere Haftklebemassen auf Silikonbasis; EP 1 903 084 A, nämlich insbesondere Haftklebemassen mit Additiven zur Verankerungsverbesserung; WO 2007/96010 A, nämlich insbesondere Selbstklebemassen, die auf Folienuntergründen besonders geeignet sind und insbesondere Synthesekautschukklebemassen, aber auch die dort beschriebenen Acrylathaftklebemassen; DE 10 2013 226 504 A, nämlich scherfeste Haftklebemassen mit hohem Tack auf Acrylatbasis.

Die erste, vorderseitige Klebmassenschicht kann insbesondere vollflächig, aber auch teilflächig (zum Beispiel in Segmenten, geradliniger Streifen, nicht geradliniger - etwa wellenförmiger - nur in bestimmten Oberflächenbereichen oder dergleichen) aufgetragen sein. Eine im Wesentlichen vollflächig aufgetragene Klebmasse kann zu einer oder beiden der Längskanten einen Abstand aufweisen, so dass dort (jeweils) ein Streifen verbleibt, der nicht mit Klebmasse versehen ist, zum Beispiel in einer Breite von jeweils einigen Millimetern.
Auf der ersten Oberfläche können auch mehrere - jeweils zusammenhängende - erste Klebmassenschichten vorgesehen sein, etwa in Form mehrerer - nicht miteinander verbundener - Teilbedeckungen, Segmente, geradliniger oder wellenförmiger Streifen oder dergleichen.
Die Aufgabe der ersten Klebmassenschicht(en) ist es insbesondere, während des fliegenden Rollenwechsels die sichere Anhaftung der neuen Flachbahn an die ablaufende alte Flachbahn zu gewährleisten. Daher werden insbesondere Klebmassen mit einem hohen Tack eingesetzt. Als Tack wird die sogenannte Anfassklebrigkeit einer Klebmasse bezeichnet, also deren Eigenschaft, eine sofortige Haftung auf einem jeweiligen Werkstoff zu bewirken.

Insbesondere für die Anwendung in der Papierindustrie oder beim normalen Tageszeitungsdruck werden vorderseitig vorteilhaft hochtackige Klebmassen eingesetzt. Es kann aber auch vorteilhaft sein, vorderseitig hochscherfeste Klebmassen einzusetzen. Dies ist insbesondere für die Anwendung am Kalander oder bei Einsatz am Trockner interessant.

Auf der zweiten Oberfläche (K32) der Trägerschicht (K3) (wegen der Positionierung des Klebebandes bei der Anwendung im Spliceprozess als Rückseite bezeichnet) ist zumindest eine zweite Klebmassenschicht (K2) vorgesehen, die ihrerseits vollflächig oder nur in Bereichen der zweiten (rückseitigen) Oberfläche vorgesehen sein kann.

In einer sehr bevorzugten Ausführungsform ist die rückseitige Klebmassenschicht (K2) in Form eines Streifens aufgebracht (beispielhaft dargestellt in Figur 5), der sich in einer vorteilhaften Ausgestaltung des Klebebandes (K) parallel zu einer dessen Kanten (LK1), also insbesondere geradlinig erstreckt. In vorteilhafter Weise erstreckt sich ein solcherinsbesondere geradliniger - Klebmassenstreifen in Längsrichtung (ℓ) des Klebebandes, also an einer oder parallel zu einer der Längskanten (LK1) des Klebebandes. Klebebänder weisen üblicherweise eine Ausdehnung in einer ersten Richtung (ℓ) aus, die sehr viel größer ist als die Ausdehnung in einer hierzu rechtwinklig definierten zweiten Richtung ( 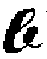 ); diese erste Richtung wird im Rahmen dieser Schrift daher als Längsrichtung (ℓ), die Ausdehnung in diese Richtung als Länge (ℓ_{K}) des Klebebandes bezeichnet. Die zweite Richtung wird als Querrichtung ( 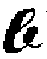 ), die Ausdehnung in dieser zweiten Richtung als Breite ( 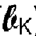 ) des Klebebandes bezeichnet. Durch die Länge (ℓ_{K}) und die Breite ( 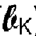 ) des Klebebandes wird dessen flächige Ausdehnung bestimmt.
Die Dicke ( 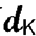 ) des Klebebandes - die Ausdehnung in der dritten, zur ersten und zur zweiten Richtung und daher zur Flächenausdehnung des Klebebandes rechtwinklig definierten Richtung (d) im kartesischen Koordinatensystem - ist üblicherweise wiederrum sehr viel geringer als die Breite des Klebebandes.

Das erfindungsgemäße Klebeband kann jedoch auch in Form von Klebebandabschnitten ("Etiketten") vorliegen, bei denen die Länge und die Breite des Klebebandes ähnlicher Größenordnung vorliegen.

In einer bevorzugten Ausführungsform ist die in Form eines Streifens aufgebrachte zweite (rückseitige) Klebmassenschicht (K2), parallel zu der ihr am nächsten liegenden Längskante (LK1) des Klebebandes (K) ausgerichtet und in einem Abstand (A1) zu dieser Längskante (LK1) eingerückt. Die Einrückung beträgt vorteilhaft bis zu 10 mm, bevorzugt 0,5 bis 5 mm, sehr bevorzugt 1 bis 3 mm. Eine spezielle Ausführungsform des erfindungsgemäßen Klebebandes weist eine Einrückung von 2 mm auf.

In einer weiteren sehr bevorzugten Ausführungsvariante ist die rückseitige Klebmassenschicht (K2) in Form eines Streifens vorgesehen, der zwar insgesamt in Längsrichtung (ℓ) des Klebebandes verläuft, aber seinerseits keine geradlinigen Kanten aufweist. Dies kann etwa derart aussehen, dass man sich eine geradlinig verlaufende imaginäre Linie in Längsrichtung des Klebebandes definieren kann, die insbesondere parallel zu zumindest einer der Längskanten (LK1) des Klebebandes verläuft, wobei diese Linie den Streifen der Klebmassenschicht - bei Aufsicht auf diesen Streifen - in zwei gleich große Flächenbereiche aufteilt. In bevorzugter Weise ist das Klebeband gedanklich durch eine Folge von Klebebandabschnitten gebildet, für die jeweils der entsprechende darauf befindliche Klebmassenabschnitt durch die imaginäre Linie in zwei Teile gleicher Fläche geteilt wird.

Ein erfindungsgemäßer Streifen mit nicht geradlinigen Kanten kann etwa derart ausgeführt sein, dass er einer linke und eine rechte Begrenzungskante aufweist, wobei zumindest eine dieser beiden Kanten ungerade ist, derart, dass die ungerade Kante Vorsprünge aufweist, die an ihren am weitesten vorspringenden Stellen stetig differenzierbar sind und eine zur imaginären Linie parallel verlaufende Tangente aufweisen; insbesondere solche Vorsprünge, die an ihren am weitesten vorspringenden Stellen gerundet ausgeführt sind. Solche Streifenformen werden beispielweise in der EP 1 948 545 A definiert. Auf die in den Ansprüchen der WO 2007/48695 A und der EP 1 948 545 B beschriebenen Linienformen und denen der in den Figuren dieser Schriften gezeigten Linienformen -insbesondere in den Figuren 1, 2, 3, 4, 5, 6 und 7 der WO 2007/48695 A - samt der dazugehörigen Offenbarung sei explizit verwiesen, diese Linienformen sind auch für die vorliegende Erfindung hervorragend realisierbar.

Insbesondere vorteilhaft sind symmetrische Wellenformen gemäß der Figur 7 der WO 2007/48695 A und hiervon abgewandelter varianten, etwa mit einer Wellenkante und einer geraden Kante, mit Wellenkanten anderer Krümmung oder mit solchen Wellenkanten, deren Maxima gegeneinander verschoben sind. So können beispielsweise auch an der imaginären Linie gespiegelte Kantenformen realisiert sein.
Ein erfindungsgemäßer Streifen mit nicht geradlinigen Kanten kann weiterhin derart ausgeführt sein, dass sich zumindest seine eine Begrenzungskante in Form einer sich parallel zur imaginären Linie erstreckenden Kurve ausgebildet ist und durch eine Abfolge von ansteigenden und abfallenden Kurvenabschnitten charakterisiert ist, so dass zwischen einem jeweiligen ansteigenden Kurvenabschnitt und einem darauf folgenden abfallenden Kurvenabschnitt im für den durch diese beiden Kurvenabschnitte gebildeten Kurvenbereich ein Maximum oder eine Mehrzahl von Maxima gebildet wird, und so dass zwischen einem jeweiligen abfallenden Kurvenabschnitt und einem darauf folgenden ansteigenden Kurvenabschnitt im für den durch diese beiden Kurvenabschnitte gebildeten Kurvenbereich ein Minimum oder eine Mehrzahl an Minima gebildet wird, wobei die Steigung im jeweils ansteigenden Kurvenabschnitt und im jeweils abfallenden Kurvenabschnitt nicht denselben Betrag aufweisen.
Solche auch für die vorliegende Erfindung vorteilhaften Kurvenverläufe zeigt beispielweise die EP 2 130 887 A, auf die in den Ansprüchen beschriebenen Linienformen und die in den Figuren dieser Schriften gezeigten Linienformen - insbesondere in den Figuren 2, 3, 3a, 4, 5, 6 und 7 - samt der dazugehörigen Offenbarung sei explizit verwiesen.
Weitere Kantenformen für nicht geradlinig verlaufende Streifenkanten, die im Sinne der vorliegenden Erfindung realisiert werden können, zeigt die EP 2 615 049 A; es sein insbesondere verwiesen auf die Ansprüche und die Figuren 2, 3, 4, 5, 6, 7, 8, 9 und den dazugehörigen Erläuterungen, wobei die dort gezeigten Geometrien auf einen Streifen gemäß der vorliegenden Erfindung übertragen werden.

Auf der zweiten (rückseitigen) Oberfläche können auch mehrere - jeweils zusammenhängende - erste Klebmassenschichten vorgesehen sein, etwa in Form mehrerer - nicht miteinander verbundener - Teilbedeckungen, Segmente, geradliniger oder nicht geradliniger - etwa wellenförmiger - Streifen oder dergleichen.
Eine solche Ausführungsform weist zwei, drei oder mehr in Längsrichtung des Klebebandes parallel verlaufender Streifen auf, zwischen denen und der zweiten Oberfläche der Trägerschicht jeweils eine Oberflächenbeschichtung zur Erzeugung von Sollbruchflächen vorgesehen ist. Es ist von Vorteil, wenn der erste dieser Streifen kann zu der ihm nächsten Längskante des Klebebandes einen Abstand aufweist, wie dies für das Klebeband mit einem Streifen vorstehend erläutert ist, insbesondere auch mit den dort angegebenen Maßen.

Ein System mit zwei Streifen kann beispielweise auch einen Streifen mit zumindest einer nicht geradlinigen, insbesondere wellenförmigen Kante - insbesondere zwei nicht geradlinige, insbesondere wellenförmige Kanten - aufweisen, etwa wie dies in der WO 2011/144466 A gezeigt ist.

Die Ausdehnungen der rückseitigen Klebmassenschichten werden vorteilhaft so gewählt, dass die gewünschte Spaltarbeit erzielt wird und dass eine sichere Verklebung gewährleistet wird. Durch die Form der Systeme kann das Spaltverhalten beeinflusst werden. Relativ schmale Sollbruchstellen - also solche, die im Verhältnis zur Breite des Hauptträgers klein sind - bieten den Vorteil, dass geringe Schwankungen in den vorgewählten Parametern für den Spaltvorgang realisierbar sind.
Klebesysteme mit linearer Streifenform (solche mit zwei parallelen kanten in Längsrichtung (ℓ) des Klebebandes) weisen beispielweise jeweils und unabhängig voneinander Breiten ( 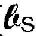 ) von 3 mm bis 30 mm, besonders von 5 bis 18 mm, ganz besonders von 15 mm und von 9 mm auf. Wellenförmige Klebesysteme können beispielweise Breiten (als Breite nicht linear verlaufender Streifens ( 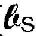 ) wird die maximale Ausdehnung des jeweiligen Streifens in Querrichtung ( 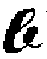 ) verstanden) von 20, 30 oder 40 mm haben. Die vorgenannten Angaben schränken die wählbreiten Breiten grundsätzlich aber nicht ein. Sofern nur eine streifenförmige rückseitige Klebmassenschicht vorliegt, ist es ebenfalls von Vorteil, hierfür die vorgenannten Abmessungen zu wählen.

Durch die Wahl der Breite der rückseitigen Klebmassenschichten, insbesondere in Streifenform, lässt sich die Spaltarbeit, die aufgewandt werden muss, um die Sollbruchstelle vollständig zu spalten, unabhängig von der Breite des Hauptträgers einstellen. Dies ist ein Vorteil zu den Systemen, bei denen sich die Sollbruchfläche vollflächig über die Breite des Hauptträgers erstreckt.

In vorteilhafter Anpassung an die jeweilige Anwendung kann bevorzugt ebenfalls eine Variante des erfindungsgemäßen Klebebandes eingesetzt werden, bei der die einzige in Streifenform vorliegende rückseitige Klebmassenschicht oder - bei mehreren Streifen - bei der die der Längskante nächstliegende rückseitige Klebmassenschicht direkt an dieser Längskante angrenzt, also nicht eingerückt ist.

Als Klebmasse für die zweite, rückseitige Klebmassenschicht wird vorteilhaft eine scherfeste Klebmasse eingesetzt.

Grundsätzlich ist es Ziel, das erfindungsgemäße Klebeband möglichst dünn auszugestalten, so dass die Dicke der zweiten Klebmassenschicht in der Regel ebenfalls möglichst dünn gewählt wird. In einer weiteren Ausführungsform kann aber auch die zweite (rückseitige) Klebmassenschicht durch ein Mehrschichtsystem ersetzt sein, das außer der untenliegenden Klebmassenschicht einen Träger (Sekundärträger) und/oder weitere Schichten umfasst. Beispielsweise kann es sich bei dem rückseitigen selbstklebenden System dann um ein doppelseitiges Selbstklebeband handeln, insbesondere wenn dieses ebenfalls streifenförmig vorgesehen ist.

Auf der zweiten Oberfläche (Rückseite) des Klebebandes können gegebenenfalls - insbesondere in Hinblick auf spezielle Anwendungen des Spliceklebebandes - dritte Klebmassenschichten vorgesehen sein, zum Beispiel in den Bereichen der Oberfläche oder Teilen dieser Bereiche, in denen keine Oberflächenbeschichtung vorgesehen ist. Diese dritte Klebmassenschicht kann beispielsweise derart gestaltet sein, dass sie nicht von der zweiten Oberfläche des Trägers ablösbar ist.

Zumindest die Flächenbereiche der zweiten Oberfläche, die mit der zweiten Klebmassenschicht versehen sind, sind mit der Oberflächenbeschichtung modifiziert. Dabei kann die Oberflächenschicht ausschließlich in den von der zweiten Klebmassenschicht bedeckten Bereichen der zweiten Oberfläche der Trägerschicht vorgesehen sein, die Oberflächenbeschichtung kann aber auch in Flächen vorliegen, in denen sich keine zweite Klebmassenschicht befindet. So kann die Oberflächenbeschichtung zum Beispiel vollflächig auf der zweiten Oberfläche der Trägerschicht vorliegen, wie dies beispielweise in der Regel bei gestrichen Papieren, bei denen der Strich bereits im Rahmen der Papierherstellung aufgetragen wird, der Fall ist.

In einer weiteren bevorzugten Ausführungsform ist die erste, vorderseitige Selbstklebeschicht (K1) mit einer Trennabdeckung (K5) versehen, die gegebenenfalls mit einer Perforation oder einem Schlitz (K5S) in Längsrichtung (l_{K}) versehen ist.
Hierfür kommen die oben genannten Materialien in Frage. Sehr vorteilhaft kann beispielsweise silikonisiertes Trennpapier verwendet werden. Der Schlitz (K5S) kann bevorzugt in einem Abstand (A2) von 10 bis 40 mm von der Längskante (LK2) des Klebebands (K) vorgesehen sein, welche der vorderen Längskante (LK1) gegenüber liegt, in deren Nähe die zweite Klebmassenschicht (K2) angeordnet ist.

Die zweite Klebmassenschicht kann vollflächig oder teilflächig auf der Rückseite des Hauptträgers vorgesehen sein.
In vorteilhafter Weise kann eine fast vollflächige Ausführung vorgesehen sein, bei der an beiden Längskanten des Trägers wenige Millimeter (beispielweise jeweils 1 oder 2 mm) breite Streifen vorgesehen sind, die keine zweite Klebmasse aufweisen.
In einer weiteren sehr vorteilhaften Ausgestaltung beträgt der mit einem oder mehreren zweiten Klebmassenschichten (K2) ausgerüstete Teil der Rückseite (K32) des Trägers (K3) bis zu 60 % der gesamten Rückseitenfläche, bevorzugt zwischen 18 und 48 %, wobei der bedeckte Teil der Rückseite auch in mehrere Flächen aufgeteilt sein kann, welche jeweils mit einer zweiten Klebmassenschicht (K2) ausgerüstet sind.

Die Ausmaße des erfindungsgemäßen Klebestreifens können je nach Anwendungsgebiet und -bestimmung unterschiedlich gewählt werden und so den jeweiligen Erfordernissen angepaßt sein. Vorteilhafte Produktdimensionen sind beispielsweise Streifen von 75 mm Breite, von 63 mm Breite, von 50 mm Breite und von 38 mm Breite, ohne sich durch diese Angaben beschränken zu wollen.
Das erfindungsgemäße Klebeband kann mit Perforationen oder Einschnitten derart versehen sein, daß sich Teilstücke bestimmter vorgegebener Länge ablängen lassen.

In einer vorteilhaften Ausführungsform ist das Klebeband mit zumindest einer mittels eines Detektors maschinell (berührungslos) erkennbaren Vorrichtung ausgestattet - beispielsweise durch induktive Detektierung -, wobei die Erkennung bevorzugt durch Metall, Transpondersysteme oder durch optische Vorrichtungen erzielt wird.
Solche maschinell oder optisch erkennbaren Vorrichtungen können prinzipiell in einer oder mehreren Schichten des Klebebandes (Träger, Klebemassenschichten, weitere Schichten) durch Beimischung geeigneter Additive in das Material der jeweiligen Schicht vorgesehen sein, und/oder die Vorrichtungen sind als eigene Schicht oder Oberflächenbeschichtung vorhandener Schichten im Klebebandverbund vorgesehen.

In einer bevorzugten Variante besteht die Trägerschicht oder Bereiche hiervon aus einem Material, welchem zumindest ein detektierbarer Zusatz zugesetzt ist, und/oder die Trägerschicht ist ein Verbund, der zumindest eine Schicht aus einem detektierbaren Material aufweist.
In einer Ausführungsform des erfinderischen Klebebandes werden dem eigentlichen Trägermaterial beispielsweise Metallpulver oder Granulate beigemischt, oder das Trägergrundgerüst wird mit einer oder mehreren Metallschichten versehen. In einer weiteren Variante des erfinderischen Klebebandes wird die integrierte Signalfunktion in der Art realisiert, dass die Trägerschicht insbesondere auf ihrer ersten, gegebenenfalls aber stattdessen oder auch auf ihrer zweiten Oberfläche mit einer Aluminiumschicht versehen ist, und zwar vorteilhaft vollflächig. Statt Aluminium lassen sich als Schicht auch alle weiteren entsprechend der Anforderungen detektierbaren Materialien verwenden, insbesondere Metalle, beispielsweise Kupfer, Silber, Gold.
Derartige Schichten befinden sich vorteilhaft auf der Vorderseite des Klebebandes beziehungsweise der Trägerschicht.
Metallschichten oder Metallbeschichtungen (z.B aus Aluminium) können auch, statt vollflächig vorzuliegen, in Form eines oder mehrere Streifen vorgesehen sein, die sich insbesondere in Längsrichtung des erfindungsgemäßen Klebebandes erstrecken. Prinzipiell können solche detektierbaren Schichten alle Formen, wie Segmente, Wellen und dergleichen, auch unregelmäßige ununterbrochene oder unterbrochene Formen, aufweisen.

In einer weiteren Ausführungsform der Erfindung können - alternativ oder zusätzlich zu Beimischungen in anderen Schichten, wie der Trägerschicht - der ersten Klebemassenschicht und/oder der zweiten Klebemassenschicht und/oder gegebenenfalls weiterer vorhandener Klebemassenschichten entsprechende detektierbare Zusätze - beispielsweise Metallpulver- oder Granulate - wie beigegeben sein.

In einer nächsten Ausführungsform der Erfindung wird die Detektion durch Transpondersysteme hervorgerufen, insbesondere durch Dünnschichttranspondern, welche in das Klebeband integriert werden. Hier sind Ausführungen mit aktiven und passiven Transpondern realisierbar.

Eine weitere Ausführungsform des erfinderischen Klebebandes zeichnet sich dadurch aus, daß das Klebeband mit optisch registrierbaren Einrichtungen versehen ist. Dies können beispielsweise Strichcodes sein, welche mit einem Laser gelesen werden können. Bei der Verwendung von Strichcodes lassen sich neben der eigentlichen Detektionswirkung zusätzlich Informationen übermitteln, beispielsweise Angaben über Art oder Bahnstärke der neuen Rolle. So kann bei Einsatz von Rollen unterschiedlicher Art oder Beschaffenheit die Verarbeitungsanlage automatisch auf die neuen Verarbeitungsbedingungen eingeregelt werden, ohne daß es einer weiteren äußeren Steuerung bedarf.
In ähnlicher Weise funktionieren optische Reflektoren oder Beugungsgitter, welche im oder an der Trägerschicht des Klebebandes angebracht sind. Diese können ebenfalls optisch detektiert werden und den Splicevorgang auslösen.
Ein weiteres Beispiel für optisch detektierbare Vorrichtungen sind bestimmte Farbgebungen der Trägerschicht und/oder der ersten Klebemassenschicht und/oder der zweiten Klebemassenschicht und/oder von Funktionsschichten und/oder anderer gegebenenfalls vorhandener Schichten, welche durch geeignete Detektiersysteme ebenfalls registriert werden können. Solche Farbgebungen können beispielweise durch die Zugabe schwarzer Pigmente geschehen.
Optisch detektierbare Vorrichtungen können auch Farbschichten an beliebigen Positionen im Schichtenverbund des Klebebandes sein, beispielsweise auf der Oberseite der Trägerschicht, zum Beispiel durch schwarzen Pigmentstrich oder schwarze Deckfarbe. Solche Farbschichten können beispielsweise auch - alternativ oder zusätzlich - zwischen der Unterseite der Hauptträgerschicht und der Oberflächenbeschichtung, die die efindungsgemäße Sollbruchstelle bewirkt, vorgesehen sein.

Für die Eignung des erfindungsgemäßen Klebebandes im bestimmungsgemäßen Einsatz sind die auf die Sollbruchfläche einwirkenden Kräfte, die benötigt werden, um den Spaltvorgang im fliegenden Rollenwechsel einzuleiten und die Kraft, die benötigt wird, um die Sollbruchfläche weiterzuspalten, von Interesse. Diese Werte sollten so eingestellt werden, dass ein An- und Weiterspalten der Sollbruchstelle nur bei der bestimmungsgemäßen Verwendung stattfindet, dann aber auch zuverlässig, ohne den Vorgang des fliegenden Rollenwechsels zu behindern. Dabei sollte vorteilhaft das Spaltsystem derart eingestellt werden, dass einerseits das Risiko des ungewollten Anspaltens in der Beschleunigungsphase vermieden wird, und andererseits ein anwendungsgerechtes Spalten des Splicebandes ohne Beschädigung der zu verbindenden Materialbahnen gewährleistet wird.
Zur Überwindung der Spaltfestigkeit an der vorderen Kante wird dabei eine erhöhte, maximale Kraft zum Anspalten des Systems benötigt (Anspaltkraft, Initialspaltkraft zum Einleiten des Spaltvorgangs der Sollbruchstelle). Des Weiteren benötigt man eine Kraft auf niedrigerem Niveau zum Spalten über die gesamte Breite des Splicebandes (Weiterspaltkraft). Das Produkt aus der aufgewendeten Kraft und der Breite des Spaltsystems ist die Arbeit, die zum Spalten benötigt wird (Spaltarbeit).
Die Anspaltkraft sollte so hoch eingestellt sein, dass das Produkt durch die bei der Beschleunigung wirkenden Fliehkräfte und aerodynamischen Kräfte nicht vorzeitig öffnet, zum anderen muss die Spaltarbeit so gering eingestellt sein, dass die benötigte Arbeit für das komplette Durchspalten des Sollbruchfläche nicht zu Abrissen führt. Durch die Ausgestaltung der erfindungsgemäßen Klebebänder lassen sich für diese Parameter hervorragende Werte realisieren.

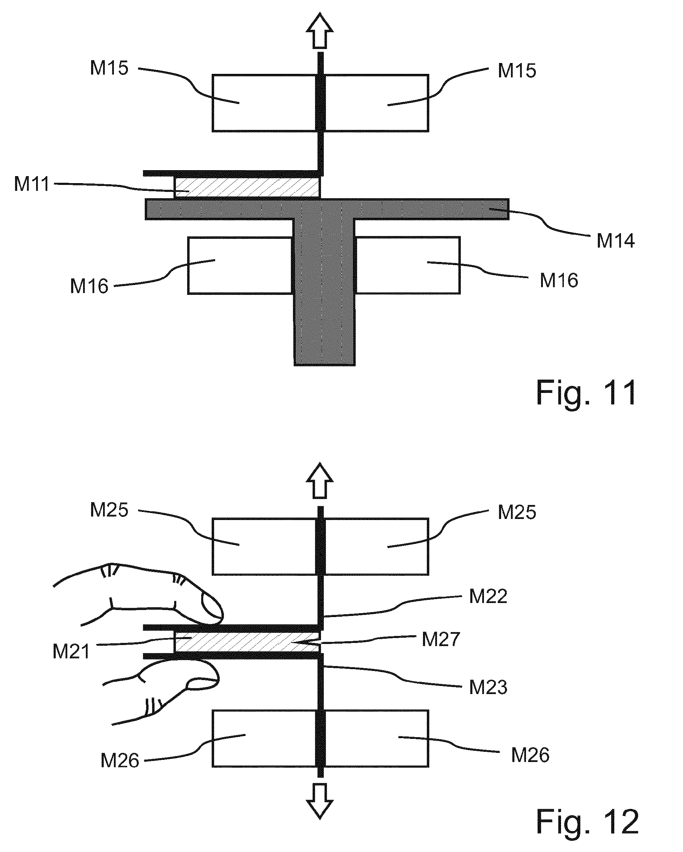

Zur Bestimmung der Anspaltkraft (Initialkraft zum Einleiten des Spaltvorgangs der Sollbruchstelle) werden Lappenmuster hergestellt (zum Beispiel in Größe DIN A4), die eine Trägerschicht mit einer ersten und einer zweiten Oberfläche umfassen, wobei auf der Seite der ersten Oberfläche der Trägerschicht mittelbar oder unmittelbar vollflächig eine erste Klebmassenschicht vorgesehen ist (entsprechend dem Aufbau dem Klebeband, für das die Anspaltkraft ermittelt werden soll), und wobei die auf der zweiten Oberfläche der Trägerschicht insbesondere vollflächig eine zweite Klebmassenschicht vorgesehen ist, wobei die zweite Oberfläche der Trägerschicht erfindungsgemäß mit einer Oberflächenbeschichtung modifiziert sind und wobei die Vorgaben des Hauptanspruchs eingehalten werden. Sollen Klebebänder untersucht werden, bei denen die Sollbruchflächen in Längsrichtung des Klebebandes Unterbrechungen aufweisen (segmentiert sind), so werden Lappenmuster mit entsprechend unterbrochener zweiter Klebeschicht hergestellt.
Sodann wird eine Kante des Lappenmusters derart abgeschnitten, dass eine glatte Schnittkante entsteht. Ein reißfestes Papier wird auf die zweite Klebmassenschicht des zu prüfenden Musters aufgelegt und die freie Klebmassenoberfläche wird mit einem silikonisierten Papier abgedeckt. Das reißfeste Papier wird leicht mit dem Finger angestrichen, um Lufteinschlüsse zu vermeiden. Danach wird mit dem Handroller zweimal zügig über den Verbund gerollt, um eine einwandfreie Verklebungsfestigkeit zu erreichen. Die Verklebung ist so herzustellen, dass das Ende des reißfesten Papiers an der glatten Kante über den Klebebandkörper herausragen. Mit dem Stahllineal werden auf Seiten der glatten Kante des Verbundes Streifen herausgeschnitten, deren Breite (parallel zur glatten Kante) 15 mm und deren Länge (rechtwinklig zur glattem Kante) ca. 20 cm beträgt und an deren einem Ende sich das überstehende Papierende befindet. Dieses überstehende Papierende dient im Folgenden als Anfasser.
Die Messvorrichtung für die Messung der Anspaltkraft ist schematisch in Figur 11 dargestellt. Eine wie vorstehend beschrieben hergestellte Probe M11 in eine Zugprüfmaschine eingespannt, wobei das silikonisierte Papier auf der vorderseitigen Klebmassenschicht abgezogen wird und die Probe mit seiner nun freiliegenden Oberfläche waagerecht auf einem in die Zugmaschine (mittels Einspannvorrichtung M16) eingespannten Träger M14 fest verklebt wird (in der Figur untenliegend), Der Anfasser des Papiers M12 auf der rückseitigen Klebmassenschicht wird in die Zugeinheit (mittels Einspannvorrichtung M15) der Zugprüfmaschine eingespannt. Es ist darauf zu achten, dass vor Beginn der Messung die Sollbruchstelle noch nicht angespalten sein darf. An dem Anfasser des auf der rückseitigen Klebmassenschicht aufgebrachten Papiers M12 wird dann mit einer Geschwindigkeit von 300 m/min derart gezogen, dass die Probe in einem Winkel von 90 ° spaltet. Die Spaltung findet dabei in der Sollbruchstelle statt. Dabei wird die Initialkraft registriert (diese entspricht dem Maximum der Kraft-Weg-Kurve), der gemessene Wert wird in Kenntnis der tatsächlichen Musterbreite auf 1 cm Probenbreite normiert. Der Mittelwert aus drei Messungen wird angegeben (in N/cm).

Zur Bestimmung der Weiterspaltkraft werden entsprechende Probestreifen hergestellt mit dem einzigen Unterschied, dass sowohl auf der Oberfläche der ersten als auch auf der Oberfläche der zweiten Klebemassen reißfeste Papiere mit Anfassern vorgesehen sind (auf der unteren Oberfläche statt des silikonisierten Papiers).
Zur Messung der Weiterspaltkraft - siehe hierzu Figur 12 - wird die so vorbereitete Probe M21 zunächst an einer der schmalen Kanten händisch angespalten (in der Figur 12 angedeutet durch den Spalt M27). Sodann wird die Probe M21 an beiden Anfassern der eindeckenden Papiere M22 und M23 in die Klemmvorrichtungen M25, M26 einer Zugprüfmaschine eingespannt und derart fixiert (beispielsweise durch Halten mit den Fingern), dass sie senkrecht auf die beiden Zugrichtungen steht und sich der Spaltvorgang bei Inbetriebnahme der Zugprüfmaschine am Spalt 27 fortsetzt. Es wird an beiden Anfassern gleichermaßen gezogen, dass die Probe mit einer Geschwindigkeit von 300 mm/min in einem Winkel von 180 ° fortspaltet. Die Spaltung findet dabei in der Sollbruchstelle statt. Angegeben wird die auf 1 cm Musterbreite normierte Kraft, die benötigt wird, um den Spaltvorgang weiterzuführen (angegeben in cN/cm).

Das Prüfklima beträgt bei allen Messungen: Temperatur 23 ± 1 °C; 50 ± 5 % relativer Luftfeuchte, Luftdruck 1013 ± 5 mbar.

In einer bevorzugten Ausführungsform der Erfindung liegt die zum Aufspalten der Sollbruchstelle des erfindungsgemäßen Klebebandes benötigte Anspaltkraft im Bereich von 0,1 N/cm bis zu 2,0 N/cm (Newton pro Zentimeter Verklebungsbreite), und die zum Aufspalten der Sollbruchfläche benötigte Kraft (Weiterspaltkraft) zwischen 5 und 50 cN/cm.

Weiterhin betrifft die Erfindung ein Spliceverfahren für den fliegenden Rollenwechsel von auf Rollen aufgewickelten Flachbahnmaterial, insbesondere wie es vorstehend bereits kurz dargestellt wurde. Das erfindungsgemäße Verfahren ist beispielhaft in den Figuren 6 bis 10 dargestellt. Erfindungsgemäß einsetzbare Klebebänder zeigen beispielhaft die Figuren 1 bis 5.
Bei einem erfindungsgemäß bevorzugten Verfahren wird zur Vorbereitung der die oberste Wicklung bildende Flachbahnabschnitt (R1) einer Rolle (R) einer neuen Flachbahn (RB) mit einem Klebeband (K), das einen Träger (K3) mit einer ersten (K31) und einer zweiten (K32) Oberfläche, eine erste Klebmassenschicht (K1) - insbesondere Selbstklebmassenschicht -, die auf der ersten Oberfläche (K31) des Trägers (K3) mittelbar oder unmittelbar vorgesehen ist, und einer zweiten Klebmassenschicht (K2) - insbesondere Selbstklebmassenschicht -, die zumindest teilflächig auf der zweiten Oberfläche (K32) des Trägers (K3) vorgesehen ist, umfasst, an dem die darunterliegende Wicklung bildenden Flachbahnabschnitt (R2) fixiert. Dies geschieht bevorzugt in einer Weise, wie es eingangs dargestellt wurde, so dass ein zum Spliceverfahren benötigter Flächenbereich (K12) der vorderseitigen, ersten Klebmassenschicht (K1) offenliegt (vgl. Figur 7). Daraufhin wird die so ausgerüstete neue Rolle (R) neben eine fast gänzlich abgespulte zu ersetzende alte Rolle (nicht dargestellt) platziert und auf die im Wesentlichen gleiche Umfangsgeschwindigkeit wie diese beschleunigt (vgl. Figur 8). Dann wird die Rolle (R) gegen die von der alten Rolle ablaufende alte Bahn (B) gedrückt, wobei der offenliegende Flächenbereich der vorderseitigen Klebmassenschicht (K12) des Klebebandes mit der alten Bahn (B) bei im Wesentlichen gleichen Geschwindigkeiten der Bahnen verklebt. Um die Verklebungszuverlässigkeit zu erhöhen, ist es vorteilhaft, von der Rückseite der Bahn während des Verklebungsvorganges mit einer Andruckvorrichtung (Walze, Bürste oder dergleichen) (A) gegenzudrücken. Bei diesem Verfahren wird ein solches Klebeband (K) eingesetzt, das für eine flächige Spaltung geeignete Bereiche ("Sollbruchflächen") aufweist, indem zumindest ein Teilbereich der zweiten Oberfläche der Trägerschicht (K3) mit einer Oberflächenbeschichtung (K4) modifiziert ist, wobei die Adhäsionskräfte der unteren Klebmassenschicht (K2) zur Oberflächenbeschichtung (K4) größer sind als die Adhäsionskräfte der Oberflächenbeschichtung (K4) zur Trägerschicht (K3) und/oder als die Kohäsionskräfte innerhalb der Oberflächenbeschichtung (K4). Dabei wird insbesondere ein erfindungsgemäßes Klebeband eingesetzt, wie es in dieser Schrift und in den Ansprüchen näher beschrieben wird. Zugleich mit oder unmittelbar nach mit der Verklebung findet zumindest in den Sollbruchflächen ein Adhäsionsbruch zwischen der Oberflächenbeschichtung (K4) und der Trägerschicht (K3) des Klebebandes (K) oder ein Kohäsionsbruch innerhalb der Oberflächenbeschichtung (K4) statt, so dass nach dem Adhäsions- beziehungsweise Kohäsionsbruch zumindest eine Teilschicht der Oberflächenbeschichtung (K4) die auf der alten Bahn (B) verklebte zweite Klebmassenschicht (K2) abdeckt und dort keine klebenden Bereiche offenliegen.

In einer Weiterentwicklung des erfinderischen Verfahrens wird das Klebeband (K) rechtwinklig zur laufenden Flachbahn (RB) verklebt. In einer vorteilhaften Variante des erfinderischen Verfahrens kann die Verklebung des Klebebandes (K) auch in einem spitzen Winkel von bis zu 30° zur laufenden Flachbahn, insbesondere von bis zu 5°, erfolgen.

Bei dem Spliceverfahren wird ein Klebeband (K) in einer geraden Linie unter die oberste Wicklung (R1) der neuen Flachbahn (RB) auf eine neue Flachbahnrolle (R) verklebt. Dabei erfolgt die Verklebung so, daß ein Teil des Klebebandes (K12) für die Verklebung mit der ablaufenden Bahn (B) frei liegen bleibt.
Bevorzugt wird das Klebeband (K) in gerader Linie unter die oberste Wicklung (R1) der Flachbahn (RB) der neuen Rolle (R) verklebt, so dass ein Teil (K12) des Klebebandes (K) frei bleibt, während die rückseitige(n) Klebmassenschicht(en) (R2) des Klebebandes (K) mit der darunter liegenden Flachbahnwicklung (R2) verklebt und damit die oberste Bahnwicklung (R1) sichert, wobei gegebenenfalls zunächst nur ein Teil (K51) der gegebenenfalls auf der ersten, vorderseitigen Klebmassenschicht (K1) befindlichen Abdeckung (K5) abgezogen wurde, so daß der zum Spliceverfahren benötigte Teil (K12) der Klebmassenschicht (K1) noch mit der Abdeckung (K52) abgedeckt ist und die Rolle (R) in diesem Zustand keine freie klebende Fläche aufweist, worauf zur abschließenden Vorbereitung des Spliceverfahrens die gegebenenfalls noch vorhandene restliche Abdeckung (K52) entfernt wird, worauf die so ausgerüstete neue Rolle (R) neben eine fast gänzlich abgespulte, zu ersetzende alte Rolle (nicht dargestellt) platziert wird und auf die im Wesentlichen gleiche Umfangsgeschwindigkeit wie diese beschleunigt wird, dann gegen die von der alten Rolle ablaufende alte Bahn (B) gedrückt wird, wobei der offenliegende Bereich (K12) der vorderseitigen Klebmassenschicht (K1) des Klebebandes (K) mit der alten Bahn (B) bei im Wesentlichen gleichen Geschwindigkeiten der Bahnen verklebt, während zugleich oder unmittelbar anschließend das Klebeband (K) im Wesentlichen in dem Bereich, in dem es mit der zweiten, rückseitigen Klebmassenschicht (K2) (bzw. den zweiten, rückseitigen Klebmassenschichten) ausgerüstet ist, spaltet und das bzw. die rückseitigen Klebmassenschicht(en) (K2) mit der von der Trägerschicht (K3) in diesem Bereich abgelösten Oberflächenbeschichtung (K4) bzw. mit einer Teilschicht der kohäsiv in diesem Bereich aufgespaltenen Oberflächenbeschichtung (K4) nichtklebend abdeckt.

In weiterer Variante wird ein erfindungsgemäßes Klebeband in Splice-Verfahren eingesetzt, bei denen die Vorbereitung der neuen Rolle nicht durch ein Unterkleben des Klebebandes unter das Bahnende der neuen bahn bewirkt wird, sondern durch ein Überkleben. Solche Klebebandausführungen und Verfahren sind beispielsweise in den Schriften EP 970 905 A oder WO 2003/024850 A beschrieben, die dort dargestellten Spliceverfahren lassen sich mit entsprechenden Klebeband-Ausführungen mit erfindungsgemäß ausgestalteten Sollbruchstellen ebenfalls hervorragend durchführen und sollen von der Erfindung umfasst werden.

Wider Erwarten ist das erfindungsgemäße Klebeband für den fliegenden Rollenwechsel hervorragend geeignet. Sehr vorteilhaft kann mit dem erfindungsgemäßen Klebeband die Dicke der Klebestelle bei dem Übergang von der alten auf die neue Rolle stark vermindert werden, so dass die eingangs beschriebenen Probleme nicht oder nur noch in sehr vermindertem Maße auftreten.

## Patentansprüche

1. Klebeband, geeignet für den fliegenden Rollenwechsel von auf Rollen aufgewickeltem Flachbahnmaterial,
umfassend eine Trägerschicht mit einer ersten und einer zweiten Oberfläche,
wobei auf der Seite der ersten Oberfläche der Trägerschicht mittelbar oder unmittelbar zumindest teilflächig eine erste Klebmassenschicht vorgesehen ist,
und wobei die zweite Oberfläche der Trägerschicht einen oder mehrere Flächenbereiche aufweist, auf denen eine zweite Klebmassenschicht vorgesehen ist, **dadurch gekennzeichnet, dass**
das Klebeband für eine flächige Spaltung geeignete Bereiche ("Sollbruchflächen") aufweist,
indem zumindest die Flächenbereiche der zweiten Oberfläche der Trägerschicht, auf denen die zweite Klebmassenschicht vorgesehen ist, mit einer Oberflächenbeschichtung modifiziert sind,
wobei die Adhäsionskräfte der unteren Klebmassenschicht zur Oberflächenbeschichtung größer sind als die Adhäsionskräfte der Oberflächenbeschichtung zur Trägerschicht,
und/oder wobei die Adhäsionskräfte der unteren Klebmassenschicht zur Oberflächenbeschichtung größer sind als die Kohäsionskräfte innerhalb der Oberflächenbeschichtung.

2. Klebeband nach Anspruch 1, **dadurch gekennzeichnet, dass**
die Trägerschicht eine Papierschicht ist, bei dem auf die Oberfläche zur Oberflächenbeschichtung eine Schicht einer chemischen Substanz aufgebracht ist.

3. Klebeband nach Anspruch 2, **dadurch gekennzeichnet, dass**
die chemische Substanz eine chemische Zusammensetzung ist oder beinhaltet, deren Hauptbestandteil ein oder mehrere Mineralien - wie beispielweise Kreide, Kaolin -, ein oder mehrere Proteinabkömmlinge - wie beispielsweise Kasein -, ein oder mehrere Polysaccharide - wie beispielweise Stärke -, ein oder mehrere Kunststoffpartikeln oder eine Mischung zweier oder mehrerer Vertreter der vorgenannten Substanzen ist.

4. Klebeband nach Anspruch 2 oder 3, **dadurch gekennzeichnet, dass** als Bestandteil
der chemischen Substanz ausschließlich oder zum Teil solche Substanzen eingesetzt werden, deren Struktur blättchenförmig und/oder schichtförmig ist.

5. Klebeband nach Anspruch 3 oder 4, **dadurch gekennzeichnet, dass** als Mineral Kaolin eingesetzt wird.

6. Klebeband nach Anspruch 3 bis 5, **dadurch gekennzeichnet, dass**
die Oberflächenbeschichtung durch Auftragen und Trocknen einer Suspension oder Lösung der Minerale, Proteinabkömmlinge, Polysaccharide und/oder durch Auftragen einer Schmelze der Kunststoffe erhältlich ist.

7. Klebeband nach einem der vorangehenden Ansprüche, **dadurch gekennzeichnet, dass**
das Flächengewicht der Oberflächenbeschichtung 1 bis 25 g/m², bezogen auf die modifizierten Bereiche, beträgt.

8. Klebeband nach einem der vorangehenden Ansprüche, **dadurch gekennzeichnet, dass** die erste Klebmassenschicht eine Selbstklebmassenschicht ist und/oder dass die zweite Klebmassenschicht eine Selbstklebmassenschicht ist.

9. Klebeband nach einem der vorangehenden Ansprüche, **dadurch gekennzeichnet, dass**
die zweite Klebmassenschicht in Form eines oder mehrerer ununterbrochener Streifens auf der zweiten Oberfläche der Trägerschicht vorgesehen ist.

10. Klebeband nach Anspruch 9, **dadurch gekennzeichnet, dass**
die Oberflächenschicht zumindest in den von dem Klebmassenstreifen bedeckten Bereichen der zweiten Oberfläche der Trägerschicht vorgesehen ist.

11. Klebeband nach Anspruch 9, **dadurch gekennzeichnet, dass** die Oberflächenschicht ausschließlich in den von dem Klebmassenstreifen bedeckten Bereichen der zweiten Oberfläche der Trägerschicht vorgesehen ist.

12. Klebeband nach einem der Ansprüche 1 bis 10, **dadurch gekennzeichnet, dass**
die Oberflächenbeschichtung auf der zweiten Oberfläche der Trägerschicht vollflächig vorliegt.

13. Klebeband nach einem der vorangehenden Ansprüche, **dadurch gekennzeichnet, dass**
die erste Klebmassenschicht mit einem Trennmaterial abgedeckt ist.

14. Klebeband nach Anspruch 13, **dadurch gekennzeichnet, dass**
das Trennmaterial mit einem Schlitz oder einer Perforation versehen ist.

15. Verfahren für das Zusammenfügen zweier Flachbahnen beim fliegenden Rollenwechsel von auf Rollen aufgewickelten Flachbahnmaterialen ("Spliceverfahren"),
a) bei welchem der die oberste Wicklung bildende Flachbahnabschnitt einer neuen Rolle mit einem Klebeband,
umfassend einen Träger mit einer ersten und einer zweiten Oberfläche, eine erste Klebmassenschicht, die auf der ersten Oberfläche des Trägers mittelbar oder unmittelbar vorgesehen ist, und einer zweiten Klebmassenschicht, die zumindest teilflächig auf der zweiten Oberfläche des Trägers vorgesehen ist,
an dem die darunterliegende Wicklung bildenden Flachbahnabschnitt fixiert wird und ein und ein zum Spliceverfahren benötigter Flächenbereich der vorderseitigen, ersten Klebmassenschicht offenliegt,
b) woraufhin die so ausgerüstete neue Rolle neben eine fast gänzlich abgespulte zu ersetzende alte Rolle platziert wird und auf die im Wesentlichen gleiche Umfangsgeschwindigkeit wie diese beschleunigt wird, dann gegen die alte Bahn gedrückt wird, wobei der offenliegende Flächenbereich der vorderseitigen Klebmassenschicht des Klebebandes mit der alten Bahn bei im Wesentlichen gleichen Geschwindigkeiten der Bahnen verklebt,
**dadurch gekennzeichnet, dass**
c) ein solches Klebeband eingesetzt wird, das für eine flächige Spaltung geeignete Bereiche ("Sollbruchflächen") aufweist, indem zumindest ein Teilbereich der zweiten Oberfläche der Trägerschicht mit einer Oberflächenbeschichtung modifiziert ist, wobei die Adhäsionskräfte der unteren Klebmassenschicht zur Oberflächenbeschichtung größer sind als die Adhäsionskräfte der Oberflächenbeschichtung zur Trägerschicht und/oder als die Kohäsionskräfte innerhalb der Oberflächenbeschichtung,
d) und zugleich mit oder unmittelbar nach der Verklebung zumindest in den Sollbruchflächen ein Adhäsionsbruch zwischen der Oberflächenbeschichtung und der Trägerschicht des Klebebandes oder ein Kohäsionsbruch innerhalb der Oberflächenbeschichtung stattfindet, so dass nach dem Adhäsionsbeziehungsweise Kohäsionsbruch zumindest eine Teilschicht der Oberflächenbeschichtung das auf der alten Bahn verklebte Klebeband abdeckt und dort keine klebenden Bereiche offenliegen.

16. Verfahren nach Anspruch 15, **dadurch gekennzeichnet, dass** ein Klebeband nach einem der Ansprüche 1 bis 14 eingesetzt wird.
